# EUROPÄISCHE PATENTSCHRIFT

(11) **EP 3 601 845 B1**
(45) Veröffentlichungstag und Bekanntmachung des Hinweises auf die Patenterteilung: **08.06.2022**
(21) Anmeldenummer: 18717258.0
(22) Anmeldetag: 28.03.2018
(51) Int. Cl.: F16H 7/10, F16H 7/12

(54) **SPANNVORRICHTUNG MIT VERSTELLMECHANISMUS UND VERFAHREN ZUM EINSTELLEN DES DREHMOMENTS DER SPANNVORRICHTUNG**
CLAMPING DEVICE HAVING ADJUSTMENT MECHANISM AND METHOD FOR ADJUSTING THE TORQUE OF THE CLAMPING DEVICE
DISPOSITIF TENDEUR AVEC MÉCANISME DE POSITIONNEMENT ET PROCÉDÉ DE RÉGLAGE DU COUPLE DU DISPOSITIF TENDEUR

(30) Priorität: 31.03.2017 DE 102017107047
(43) Veröffentlichungstag der Anmeldung: 05.02.2020
(73) Patentinhaber: Muhr und Bender KG, 57439 Attendorn (DE)
(72) Erfinder: PFEIFER, Simon, 58840 Plettenberg (DE); JUD, Joachim, 57567 Daaden (DE)
(74) Vertreter: Neumann Müller Oberwalleney Patentanwälte PartG mbB
(86) Internationale Anmeldenummer: PCT/EP2018/057903
(87) Internationale Veröffentlichungsnummer: WO 2018/178143

(56) Entgegenhaltungen:
- EP-A1- 3 023 670
- EP-A2- 2 128 489
- WO-A1-99/47834
- CN-A- 105 240 471
- DE-A1-102015 211 227
- US-A1- 2008 070 730

## Beschreibung

Die Erfindung betrifft eine Spannvorrichtung für einen Zugmitteltrieb sowie ein Verfahren zum Einstellen des Drehmoments einer solchen Spannvorrichtung. Ein Zugmitteltrieb - auch Zugmittelgetriebe oder Umschlingungsgetriebe genannt - ist ein Getriebe, bei dem ein Drehmoment zwischen zwei oder mehr Wellen mit Hilfe eines Zugmittels übertragen wird. In der Regel umfasst ein Zugmitteltrieb ein endloses Zugmittel und zumindest zwei hiervon umschlungene Räder, von denen eines als Antrieb und eines als Abtrieb des Zugmittels fungieren kann.

Es werden insbesondere kraftschlüssige und formschlüssige Zugmitteltriebe unterschieden. Bei kraftschlüssigen Zugmitteltrieben wird das Drehmoment durch die in der Kontaktfläche zwischen Riemen und Riemenscheibe wirkenden Reibkräfte übertragen. Bei formschlüssigen Zugmitteltrieben, das heißt Kettentrieben oder Zahnriementrieben, wird das Drehmoment durch Räder mit einer entsprechenden formschlüssigen Profilierung auf das beziehungsweise von dem Zugmittel übertragen.

Zugmitteltriebe in Form von Riementrieben kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Zwischen der Kurbelwelle und dem in Umlaufrichtung des Riemens benachbarten Aggregat, in der Regel der Generator, ist das Lostrum ausgebildet. Um hier eine ausreichende Umschlingung des Riemens um die Riemenscheibe zu gewährleisten, wird der Riemen mittels einer Spannrolle der Spannvorrichtung vorgespannt.

Aus der EP 2 128 489 A2, ist eine Spannvorrichtung für einen Riementrieb mit Starter-Generator bekannt. Die Spannvorrichtung weist ein Gehäuse auf, in dem zwei Spannarme um eine gemeinsame Schwenkachse schwenkbar gelagert sind. Die Spannarme sind mit Federmitteln gegeneinander abgestützt. Das Gehäuse ist bei an den Starter-Generator montierter Antriebsriemenscheibe dadurch montierbar, dass das Gehäuse in einem die Antriebswelle des Starter-Generators umgebenden Ringbereich berührungsfrei gegenüber dem Starter-Generator ist.

Aus der EP 2 573 423 A1 ist eine Riemenspannvorrichtung bekannt, die einen Grundkörper mit einem daran schwenkbar gelagerten Spannarm aufweist. Die Riemenspannvorrichtung ist derart gestaltet, dass die Schwenkachse des Spannarms in montiertem Zustand innerhalb des Außendurchmessers der Riemenscheibe des Aggregats angeordnet ist.

Aus der DE 10 2015 211 227 A1 ist ein Zugmittelspanner für einen Zugmitteltrieb einer Verbrennungskraftmaschine bekannt. Der Zugmittelspanner umfasst zwei Spannarme, die relativ zueinander verdrehbar sind und jeweils eine Spannrolle aufweisen, eine Federeinrichtung, welche die beiden Spannrollen aufeinander zu spannt, sowie einen Aktor zur Verdrehung der Spannarme aufeinander zu. Der Aktor ist als Elektromotor gestaltet, der bei Betrieb ansteuerbar ist, um die Spannrollen gezielt zu verstellen.

Aus der DE 39 05 218 C1 ist eine Einstelleinrichtung für die Einstellung der Riemenspannung des Treibriemens eines Kraftfahrzeugs bekannt. Die Einstelleinrichtung hat ein Spannelement, das in Form eines Ritzels gestaltet ist, und ein Spanngegenelement in Form einer Zahnstange, mit der das Spannelement in Eingriff ist. Durch Verdrehen des Spannelements wird die Lichtmaschine gegenüber dem Fahrzeugmotor verschwenkt und damit in der Ebene des Treibriemens verstellt.

US 2008/070730 A1 beschreibt eine Vorrichtung zum Spannen eines flexiblen Antriebselements. Die Vorrichtung ist mit einem Paar gegenüberliegender Kontaktelemente in Kontakt mit einem oberen und einem unteren Trum des flexiblen Antriebselements. Die Vorrichtung umfasst ein Verbindungselement in Form eines Federbügels, um die Kontaktelemente zusammenzuziehen und die Kontaktelemente in einem ausgewählten Abstand voneinander zu positionieren, um dem flexiblen Antriebselement eine vorbestimmte Spannung bereitzustellen.

Riementriebe unterliegen statischen Trumkraftschwankungen, welche durch Produktionstoleranzen in der Riemenlänge, den Durchmesser- und Lagetoleranzen der Scheiben zueinander und Drehmomenttoleranzen der Riemenspanner-Feder entstehen. Dies gilt für konventionelle Riemenspanner mit einem Spannarm sowie für Riemenspanner mit Pendelarmen in riemengetriebenen Starter-Generator-Anwendungen. Aufgrund der statischen Schwankungen der Trumkräfte müssen die Komponenten eines Riementriebs für einen großen Bereich zwischen einer kleinsten und einer größten Trumkraft robust ausgelegt werden. Für eine schlupffreie Leistungsübertragung werden verhältnismäßig hohe Trumkräfte vorgehalten.

Hiervon ausgehend ist eine Aufgabe der vorliegenden Erfindung, eine Spannvorrichtung für ein Zugmitteltrieb vorzuschlagen, das eine Reduktion der Trumkräfte des Zugmitteltriebs beziehungsweise eine Auslegung des Riementriebs auf geringere Trumkräfte ermöglicht. Ferner liegt der vorliegenden Erfindung die Aufgabe zugrunde, ein entsprechendes Verfahren zum Einstellen des Drehmoments einer solchen Spannvorrichtung vorzugschlagen.

Eine Lösung ist eine Spannvorrichtung für einen Zugmitteltrieb, umfassend: einen Grundkörper zum Verbinden mit einem ortsfesten Bauteil; zumindest einen Spannarm, der relativ zum Grundkörper um eine Schwenkachse schwenkbar gelagert ist, mit einer Spannrolle, die auf einem Lagerträger des Spannarms drehbar gelagert ist; Federmittel zum federnden Beaufschlagen des Spannarms, wobei sich die Federmittel zwischen einer ersten Federabstützung des Spannarms und einer zweiten Federabstützung der Spannvorrichtung um die Schwenkachse erstrecken; und gekennzeichnet durch einen Verstellmechanismus zum Verstellen der ersten Federabstützung gegenüber dem Lagerträger der Spannrolle in Umfangsrichtung um die Schwenkachse, so dass im montierten Zustand der Spannvorrichtung der Winkel zwischen der ersten Federabstützung und der zweiten Federabstützung bezogen auf die Schwenkachse und damit die Federvorspannkraft der Federmittel veränderbar ist.

Ein Vorteil der Spannvorrichtung ist, dass der Verstellmechanismus eine Einstellung beziehungsweise Veränderung der Trumkraft des Zugmitteltriebs ermöglicht. Dies wird dadurch erreicht, dass die erste Federabstützung relativ zum Lagerträger beziehungsweise der hiermit verbundenen Spannrolle in Umfangsrichtung bewegbar ist. Hierdurch wird auch die Umfangslänge zwischen der ersten Federabstützung und der zweiten Federabstützung verändert, so dass die Federvorspannkraft verändert wird. Mit der Angabe in Umfangsrichtung soll insbesondere jede Verstellbewegung mit umfasst sein, welche eine Komponente in Umfangsrichtung hat. Die am Zugmittel anliegende Trumkraft kann auf das für eine schlupffreie Leistungsübertragung nötige Maß begrenzt werden, so dass Reibungsverluste entsprechend reduziert werden können, was sich günstig auf die Effizienz des Riementriebs auswirkt. Die zweite Federabstützung ist einem Bauteil des Riemenspanners zugeordnet, gegenüber dem der (erste) Spannarm schwenkbar ist. Dabei kann es sich insbesondere um einen weiteren (zweiten) Spannarm oder den Grundkörper handeln.

Demnach wird, im montierten Zustand der Spannvorrichtung, der Winkel zwischen der ersten Federabstützung und der zweiten Federabstützung bezogen auf die Schwenkachse des Spannarms verändert. Im montierten Zustand der Spannvorrichtung ist die Spannrolle ortsfest zum Bauteil, gegen das die Federmittel abgestützt sind, gehalten. Der Zugmitteltrieb ist zur Drehmomentübertragung zwischen zwei oder mehr Wellen mit Hilfe eines endlosen Zugmittels ausgestaltet. Insbesondere kann der Zugmitteltrieb in Form eines Riementriebs, Zahnriementriebs oder Kettentriebes gestaltet sein.

Der Verstellmechanismus ist ausgestaltet, um die erste Federabstützung gegenüber dem Lagerträger, beziehungsweise der hierauf gelagerten Spannrolle, in Umfangsrichtung um die Schwenkachse zu verstellen. Hierfür kann der Verstellmechanismus ein Stellglied aufweisen, das mit der Federabstützung starr verbunden ist, und ein Stützglied, das mit dem Lagerträger starr verbunden ist, wobei das Stellglied gegenüber dem Stützglied in Umfangsrichtung um die Schwenkachse verstellbar geführt ist, sowie ein Betätigungsglied zum Verstellen des Stellglieds gegenüber dem Stützglied. Mit starrer Verbindung ist insbesondere gemeint, dass die genannten Teile unbeweglich zueinander sind und insbesondere einteilig ausgeführt sein können. Für die Ausgestaltung und Anordnung des Stellglieds, des Stützglieds und des Betätigungsglieds kommen verschiedene Möglichkeiten in Frage, beispielsweise die folgenden.

Das Betätigungsglied kann nach einer ersten Ausführungsform am Spannarm drehbar befestigt sein und zum Verdrehen mit einer Betätigungsstruktur ausgestaltet sein. Die Betätigungsstruktur des Betätigungsglieds kann mit der Gegenstruktur eines mit dem Lagerträger zur gemeinsamen Bewegung verbundenen Gegenbauteils zusammenwirken, und zwar derart, dass ein Verdrehen des Betätigungsglieds und der damit drehfest verbundenen Betätigungsstruktur eine Umfangsbewegung des Spannarms relativ zum Lagerträger in Umfangsrichtung um die Schwenkachse bewirkt. Nach einer ersten Möglichkeit kann die Betätigungsstruktur in Form einer Zahnstruktur gestaltet sein, die mit einem Zahnsegment des Gegenbauteils zusammenwirkt, wobei das Gegenbauteil eine obere Abdeckscheibe für die Spannrolle ist. Ein Verdrehen der Zahnstruktur bewirkt dabei eine insbesondere lineare Bewegung des Gegenbauteils und des damit verbundenen Lagerträgers. Nach einer zweiten Möglichkeit kann das Betätigungsglied eine Exzenterflächenstruktur als Betätigungsstruktur aufweisen, die mit einer Gegenfläche des Gegenbauteils zusammenwirkt, wobei das Gegenbauteil eine obere Abdeckscheibe für die Spannrolle ist. Die Exzenterflächenstruktur kann beispielsweise in Form einer exzentrischen Stellkurve gestaltet sein, so dass durch Verdrehen des Betätigungsglieds ein Verstellen des Lagerträgers relativ zum Spannarm bewirkt wird. Für beide Möglichkeiten gilt, dass der Lagerträger eine sich in Umfangsrichtung länglich erstreckende axiale Durchgangsöffnung aufweisen kann, durch die ein Befestigungselement wie eine Schraube zum Verbinden der Spannrolle mit dem Spannarm hindurchgeführt werden kann. Die längliche Durchgangsöffnung ermöglicht bei Verdrehen des Betätigungsglieds eine Umfangsbewegung des Lagerträgers gegenüber dem Spannarm.

Nach einer weiteren Ausführungsform kann das Betätigungsglied mit dem Lagerträger fest verbunden sein, und der Lagerträger kann mit einer unteren Abdeckscheibe für die Spannrolle drehfest verbunden sein, wobei die Betätigungsstruktur an der unteren Abdeckscheibe in Form einer Exzenterflächenstruktur gebildet ist, und wobei die Gegenstruktur an dem Spannarm in Form einer Gegenfläche gebildet ist, an der die Exzenterflächenstruktur abgestützt ist.

Im Kraftübertragungspfad zwischen dem Betätigungsglied und dem Stellglied können Rastmittel vorgesehen sein, die ausgestaltet sind, um das Stellglied gegenüber dem Stützglied in definierten Stellungen zu halten. Die Position der Rastmittel, die auch als Rastmechanismus bezeichnet werden können, ist prinzipiell beliebig innerhalb des Kraftübertragungspfads. Mit Kraftübertragungspfad werden in diesem Zusammenhang alle Bauteile verstanden, welche zur Kraftübertragung zwischen dem Betätigungsglied und dem Stellglied liegen.

Nach einer Ausgestaltung kann der Verstellmechanismus so gestaltet sein, dass die erste Federabstützung und die Spannrolle gegeneinander um bis zu 10° um die Schwenkachse verstellbar sind. Dieser Verstellbereich sollte jedenfalls hinreichend groß sein, um die Trumkräfte unter Berücksichtigung aller Lage- und Fertigungstoleranzen der die Trumkräfte beeinflussenden Bauteile auf das gewünschte Maß einzustellen. In weiterer Konkretisierung kann insbesondere vorgesehen sein, dass die erste Federabstützung und die Spannrolle ausgehend von einer mittleren Ausgangslage um bis zu ± 5° um die Schwenkachse verstellbar sind. Hiermit wird in günstiger Weise erreicht, dass die Federmittel ausgehend von der Mittellage in beide Richtungen variiert beziehungsweise eingestellt werden können. Das heißt, die Trumkräfte können je nach Bedarf vergrößert oder verkleinert werden.

Der Verstellmechanismus ist vorzugsweise so gestaltet, dass die Verstellung zumindest im Wesentlichen in Umfangsrichtung erfolgt. Hiermit soll insbesondere mit umfasst sein, dass die Verstellung auf einem Umfangsbogen oder einer Geraden etwa tangential zur Schwenkachse erfolgt. Nach einer bevorzugten Ausführungsform ist zwischen der ersten Federabstützung und den Federmitteln ein Anschlag gebildet, wobei der Verstellmechanismus insbesondere so gestaltet ist, dass der Anschlag ausgehend von einer Ausgangslage innerhalb eines Winkelbereichs von bis zu ± 10° relativ zu einer Tangente in Umfangsrichtung um die Schwenkachse (A) bewegbar ist. Dabei kann die Tangente definiert werden als eine Senkrechte zum Radius von der Schwenkachse zum Anschlag. Anstelle des Anschlags kann auch ein andere mit dem Spannarm verbundenes Element als Bezugspunkt betrachtet werden. Durch eine Verstellung der Federabstützung im Wesentlichen in Umfangsrichtung bleibt die Wirkrichtung der von der Spannrolle auf das Zugmittel wirkenden Vorspannkräfte im Wesentlichen unverändert.

Die Federmittel sind ausgestaltet und angeordnet, um den zumindest einen Spannarm in Umfangsrichtung zu beaufschlagen. Es kann zumindest eine Feder vorgesehen sein, das heißt eine oder mehrere Federn, die sich vorzugsweise um die Längsachse herum erstreckt. Die Feder kann insbesondere als Biegefeder gestaltet sein, die sich mit radialem Abstand in Umfangsrichtung um die Schwenkachse des Spannarms herum erstreckt. Unter Biegefeder wird insbesondere eine Feder verstanden, die bei Belastung im Wesentlichen auf Biegung beansprucht wird. Die Biegefeder erstreckt sich in Umfangsrichtung um die Schwenkachse zwischen der ersten Federabstützung und der zweiten Federabstützung über eine Umfangserstreckung von insbesondere weniger als 980° (drei Windungen), vorzugsweise weniger als 720° (zwei Windungen), gegebenenfalls weniger als 360° (eine Windung). Dabei kann der Radius der Biegefeder entlang der Umfangserstreckung variieren. Als Beispiele für eine Biegefeder werden hier eine Bügelfeder genannt, die sich in Umfangsrichtung um vorzugsweise weniger als 360° um die Schwenkachse erstreckt, oder eine Schraubenfeder, die sich um mehr als 360° und/oder um weniger als 980° um die Schwenkachse erstrecken kann. Für einen kompakten Aufbau ist es günstig, wenn das Verhältnis von Nenndurchmesser der Schraubenfeder zu axialer Länge der Schraubenfeder, im Einbauzustand, größer als 4,0, insbesondere größer als 5,0 ist.

Die Ausgestaltung und Anordnung der zweiten Federabstützung hängt von der Art des Riemenspanners ab, welcher als Einarmspanner oder Zweiarmspanner gestaltet sein kann. Bei einem Einarmspanner ist genau ein Spannarm vorgesehen, der in Umfangsrichtung über die Federmittel an dem Grundkörper federnd abgestützt ist. Bei dieser Ausführungsform ist die zweite Stützfläche, gegen die sich die Federmittel in Umfangsrichtung abstützen, entsprechend dem Grundkörper zugeordnet.

Ein Zweiarmspanner hat zwei Spannarme, nämlich einen ersten Spannarm mit einer ersten Spannrolle und einen zweiten Spannarm mit einer zweiten Spannrolle, wobei die beiden Spannarme über die Federmittel gegeneinander in Umfangsrichtung abgestützt sind. Der zweite Spannarm beaufschlagt mit der zweiten Spannrolle das Zugmittel. Die beiden Spannarme können gegeneinander bzw. gegenüber dem Grundkörper um eine jeweils eigene oder eine gemeinsame Schwenkachse schwenkbar gelagert sein. Bei dieser Ausführungsform mit zwei Spannarmen ist die zweite Stützfläche, gegen die sich die Federmittel in Umfangsrichtung abstützen, dem zweiten Spannarm zugeordnet, so dass die beiden Spannarme über die Federmittel in Umfangsrichtung relativ zueinander federnd abgestützt sind.

Zweiarmspanner kommen in Riementrieben zum Einsatz, bei denen ein Startergenerator als ein Nebenaggregat in den Riementrieb integriert ist, das heißt ein Elektromotor, der je nach Betriebszustand als Starter (Anlasser) oder Lichtmaschine (Generator) betrieben werden kann. Im Normal- oder Motorbetrieb ist die Riemenscheibe an der Kurbelwelle die treibende Scheibe, während der Startergenerator wie auch die übrigen Aggregate angetrieben werden. Im Start- oder Anlasserbetrieb treibt der Startergenerator über die zugehörige Riemenscheibe die Kurbelwelle an, um den Verbrennungsmotor zu starten. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums und damit zwei Spannarme vorzusehen, von denen jeweils eine am Lostrum unter Federkraft wirksam wird, während die andere vom gespannten Zugtrum zurückgedrängt wird.

Nach einer Ausführungsform können der Grundkörper und/oder der zumindest eine Spannarm eine Öffnung aufweisen, in die sich eine Antriebswelle und/oder Riemenscheibe eines Aggregats in montiertem Zustand hinein erstrecken kann. Der Grundkörper kann als Stahlbauteil gestaltet sein, insbesondere als Blechumformteil. Hiermit wird in vorteilhafter Weise eine hohe Festigkeit und Steifigkeit bei niedrigem Materialeinsatz erreicht. Der Grundkörper kann einen oder mehrere Befestigungsabschnitte aufweisen, die insbesondere flanschartig von dem die Öffnung umgebenden Abschnitt, durch den die Antriebswelle geführt ist, abstehen. Günstig ist es, wenn mehrere Befestigungspunkte vorgesehen sind, an denen der Grundkörper mit dem Aggregat verbunden werden kann.

Eine Lösung besteht weiter in einem Verfahren zum Einstellen des Drehmoments einer Spannvorrichtung, die einen gegenüber einem anderen Bauteil der Spannvorrichtung um eine Schwenkachse schwenkbaren Spannarm mit einer Spannrolle, Federmittel, über die der Spannarm gegenüber dem Bauteil in Umfangsrichtung abgestützt ist, sowie einen Verstellmechanismus zum Verstellen des Spannarms relativ zur Spannrolle aufweist, mit folgenden Schritten: Festlegen eines Soll-Drehmoments, das die Spannvorrichtung in montiertem Zustand aufweisen soll; Messen des tatsächlichen Drehmoments der Spannvorrichtung über einem Schwenkwinkel des Spannarms beim Verschwenken des Spannarms relativ zu dem Bauteil, gegen das die Federmittel abgestützt sind; Verschwenken des Spannarms relativ zu dem Bauteil bis zu einem Soll-Schwenkwinkel, in dem das Soll-Drehmoment anliegt; und Aufbringen einer den Soll-Schwenkwinkel repräsentierenden Markierung auf der Spannvorrichtung.

Mit dem Verfahren kann die Federvorspannung der Spannvorrichtung stets auf den nominellen Drehmomentwert eingestellt werden. Mit anderen Worten kann die Spannvorrichtung im Einbauzustand auf geringstmögliche Trumkräfte eingestellt werden, welche für eine schlupffreie Leistungsübertragung im Riementrieb nötig sind. Mit der Spannvorrichtung und dem Verfahren lassen sich statische Trumkrafttoleranzen, die beispielsweise durch Fertigungs-, Lage- und Federdrehmomenttoleranzen entstehen können, ausgleichen. Das Verfahren und die Vorrichtung sind Teile eines einheitlichen Konzepts, so dass alle Merkmale des Verfahrens auf die Vorrichtung, und umgekehrt, alle Merkmale der Vorrichtung auf das Verfahren, übertragen werden können. Insbesondere kann das Verfahren mit der erfindungsgemäßen Spannvorrichtung durchgeführt werden, die eine oder mehrere der oben genannten Ausgestaltungen haben kann.

Das Soll-Drehmoment kann beispielsweise berechnet oder vom Endabnehmer vorgegeben werden. Die Berechnung des Soll-Drehmoments kann beispielsweise basierend auf Leistungsdaten des Riementriebs wie vom Zugmittel zu übertragendes Drehmoment, Grad der Umschlingung an der Antriebsriemenscheiben, Art des Zugmittels, Nenn-Drehmoment des Aggregats etc. erfolgen. Das Messen des Drehmoments der Spannvorrichtung kann mittels einer geeigneten Messvorrichtung erfolgen, das Federmoment über dem Schwenkwinkel des Spannarms erfasst. Hieraus lässt sich eine Drehmoment-Spannwinkel-Kennlinie für die jeweilige Spannvorrichtung ableiten. Dabei nimmt das von der Spannvorrichtung erzeugte Drehmoment mit zunehmendem Schwenken des Spannarms gegen die Federabstützung aufgrund der zunehmenden Federvorspannung entsprechend zu. Mittels der Drehmoment-Spannwinkel-Kennlinie ist jedem Schwenkwinkel des Spannarms ein entsprechendes Drehmoment zugeordnet. Zum Einstellen des gewünschten Soll-Drehmoments wird der Spannarm in die entsprechende Schwenkposition beziehungsweise Winkelstellung überführt. In dieser Position wird eine Markierung auf die Spannvorrichtung aufgebracht, welche ermöglicht, dass der Spannarm reproduzierbar, ohne erneute Drehmomentmessung auf die gewünschte Winkelposition verschwenkt werden kann.

Die Markierung kann beispielsweise in Form einer optisch und/oder haptisch wahrnehmbaren Markierung gestaltet sein, die beispielsweise durch Farbe, Ätzen, thermische Behandlung mittels Laser oder in ähnlicher Weise aufgebracht werden kann. Insbesondere kann vorgesehen sein, dass ein erstes Markierungselement dem Spannarm und ein zweites Markierungselement dem Bauteil, gegenüber dem der Spannarm schwenkbar ist, zugeordnet wird, welche in der gewünschten Soll-Winkelstellung einander axial gegenüberliegen.

In einem nachfolgenden Schritt wird die Spannvorrichtung in einen Riementrieb eingebaut. Hierfür wird die Spannvorrichtung an einem ortsfesten Bauteil angebracht, der Riemen um alle Antriebsriemenscheiben gelegt und die Spannrolle unter Federvorspannung gegen den Riemen beaufschlagt. Nun kann der Spannarms mittels des Verstellmechanismus relativ zur Spannrolle verstellt werden, bis die den Soll-Schwenkwinkel repräsentierende Markierung erreicht ist beziehungsweise die Markierungselemente miteinander fluchten. In dieser Stellposition wird der Verstellmechanismus fixiert. Es liegt nun das gewünschte Soll-Drehmoment an.

Bevorzugte Ausführungsbeispiele werden nachstehend anhand der Zeichnungsfiguren erläutert. Hierin zeigt
- Figur 1A: eine erfindungsgemäße Riemenspannvorrichtung in einer ersten Ausführungsform in Axialansicht;
- Figur 1B: die Riemenspannvorrichtung aus Figur 1A in perspektivischer Darstellung;
- Figur 1C: die Riemenspannvorrichtung aus Figur 1A mit verstellbarer Spannrolle in Explosionsdarstellung;
- Figur 1D: die verstellbare Spannrolle der Riemenspannvorrichtung aus Figur 1A als Detail im Längsschnitt;
- Figur 1E: die verstellbare Spannrolle der Riemenspannvorrichtung aus Figur 1A in verschiedenen Stellpositionen (P0, P1, P2);
- Figur 2: eine Drehmomentkennlinie (Ispring) zur Ermittlung einer Soll-Winkelstellung zur Einstellung der Federvorspannung für eine erfindungsgemäße Riemenspannvorrichtung;
- Figur 3: einen Riementrieb mit der Riemenspannvorrichtung aus Figur 1;
- Figur 4A: eine erfindungsgemäße Riemenspannvorrichtung in einer zweiten Ausführungsform in Axialansicht;
- Figur 4B: die Riemenspannvorrichtung aus Figur 4A in perspektivischer Darstellung;
- Figur 4C: die Riemenspannvorrichtung aus Figur 4A mit verstellbarer Spannrolle in Explosionsdarstellung;
- Figur 4D: die verstellbare Spannrolle der Riemenspannvorrichtung aus Figur 4A als Detail im Längsschnitt;
- Figur 5A: eine erfindungsgemäße Riemenspannvorrichtung in einer weiteren Ausführungsform in perspektivischer Darstellung von schräg unten, mit verstellbarer Spannrolle in Explosionsdarstellung;
- Figur 5B: die verstellbare Spannrolle der Riemenspannvorrichtung aus Figur 5A als Detail im Längsschnitt;
- Figur 5C: die verstellbare Spannrolle aus Figur 5B im Querschnitt durch die Stellkontur;
- Figur 6A: eine erfindungsgemäße Riemenspannvorrichtung in einer weiteren Ausführungsform in perspektivischer Darstellung von schräg vorne;
- Figur 6B: ein Detail der Riemenspannvorrichtung aus Figur 6A in perspektivischer seitlicher Ansicht auf den Verstellmechanismus;
- Figur 7: eine erfindungsgemäße Riemenspannvorrichtung in einer weiteren Ausführungsform in perspektivischer Darstellung von schräg oben;
- Figur 8A: eine erfindungsgemäße Riemenspannvorrichtung in einer weiteren Ausführungsform in einer perspektivischen Explosionsdarstellung;
- Figur 8B: die Riemenspannvorrichtung aus Figur 8A in einer Draufsicht;
- Figur 8C: die Riemenspannvorrichtung aus Figur 8A in einer Seitenansicht; und
- Figur 8D: die Riemenspannvorrichtung aus Figur 8A in einer Draufsicht in teilweise geschnittener Darstellung.

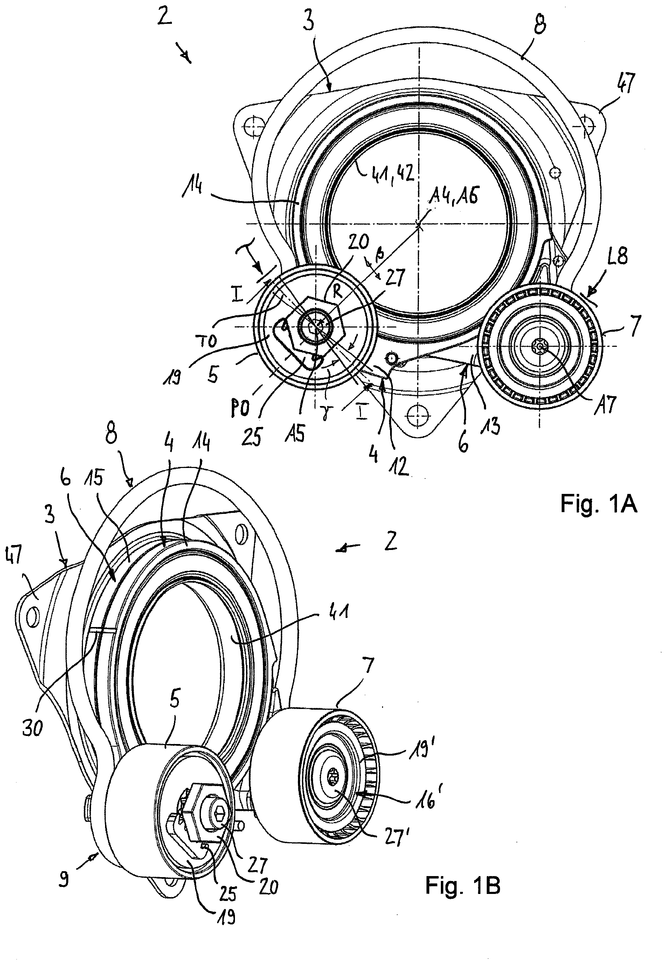

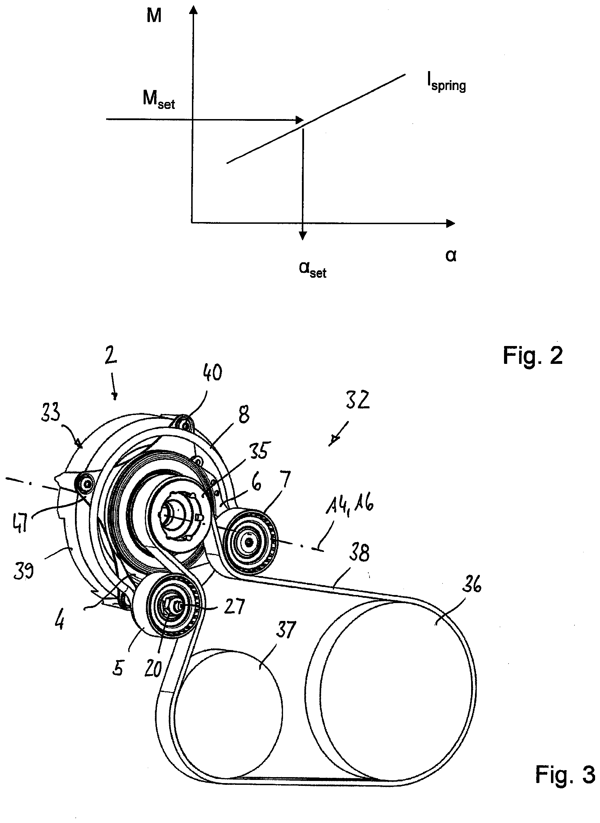

Die Figuren 1A bis 1E, welche zusammen mit den Figuren 2 und 3 im Folgenden gemeinsam beschrieben werden, zeigen eine erfindungsgemäße Riemenspannvorrichtung 2 in einer ersten Ausführungsform. Die Riemenspannvorrichtung 2 umfasst einen Grundkörper 3, einen ersten Spannarm 4 mit einer ersten Spannrolle 5, einen zweiten Spannarm 6 mit einer zweiten Spannrolle 7 und eine Feder 8, über welche die beiden Spannarme 4, 6 in Drehrichtung gegeneinander federnd abgestützt sind. Die Feder 8 erstreckt sich zwischen einer ersten Federabstützung 9 des ersten Spannarms 4 und einer zweiten Federabstützung 10 des zweiten Spannarms 6 über eine Umfangslänge L8. Es ist ein Verstellmechanismus 11 vorgesehen, um die erste Federabstützung 9 gegenüber der ersten Spannrolle 5 in Umfangsrichtung zu verstellen. Mittels des Verstellmechanismus 11, auf den weiter unten noch näher eingegangen wird, kann die Umfangslänge L8 zwischen den beiden Federabstützungen 9, 10 und damit die zwischen den Spannrollen 5, 7 wirksame Federvorspannung beziehungsweise Drehmoment verändert werden.

Der Grundkörper 3 kann an einem ortsfesten Bauteil wie einem Aggregat befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 3 mehrere über den Umfang verteilte Befestigungsabschnitte 47, die insbesondere in Form von nach radial außen vorstehende Flanschvorsprüngen mit Bohrungen gestaltet sind, durch die Schrauben zur Befestigung an dem ortsfesten Bauteil durchgesteckt werden können. Die beiden Spannarme 4, 6 der Riemenspannvorrichtung 2 sind über entsprechende Lagermittel gegeneinander beziehungsweise gegenüber dem Grundkörper 3 um eine Schwenkachse A4, A6 drehbar gelagert. Der Grundkörper 3, der erste Spannarm 4 und/oder der zweite Spannarm 6 sind vorzugsweise als Stahlbauteile ausgeführt, welche insbesondere umformend aus Blech hergestellt werden können.

Der erste Spannarm 4 ist mittels eines ersten Lagers um eine erste Schwenkachse A4 schwenkbar gelagert. Der zweite Spannarm 6 ist mittels eines zweiten Lagers um eine zweite Schwenkachse A6 schwenkbar gelagert. Vorliegend sind die beiden Lager koaxial zueinander angeordnet, das heißt die beiden Schwenkachsen A4, A6 fallen zusammen. Grundsätzlich ist es jedoch für bestimmte Anwendungen auch denkbar, dass die beiden Schwenkachsen parallel beziehungsweise exzentrisch zueinander angeordnet sein können.

Die sich in Umfangsrichtung um die Schwenkachsen A4, A6 erstreckende Feder 8 wirkt einer relativen Schwenkbewegung der beiden Spannarme 4, 6 entgegen. Die beiden Spannarme 4, 6 sind durch die zwischengeschaltete Feder 8 relativ zueinander begrenzt drehbar und können zusammen mit der Feder 8 gegenüber dem Grundkörper 3 um die Achsen A4, A6 frei drehen, das heißt um 360° und mehr. Es ist vorgesehen, dass die Schwenkachsen A4, A6 in montiertem Zustand der Riemenspannvorrichtung 2 innerhalb der Öffnung 41 des Grundkörpers 3 liegen.

Die Spannarme 4, 6 haben jeweils einen Trägerabschnitt 12, 13, der von einem ringförmigen Lagerabschnitt 14, 15 des jeweiligen Spannarms 4, 6 nach radial außen vorsteht. An dem Trägerabschnitt 12, 13 ist jeweils eine zugehörige Spannrolle 5, 7 befestigt und mittels entsprechender Lager 16, 16' um zu den Schwenkachsen A4, A6 parallele Drehachsen A5, A7 drehbar gelagert. Das Lager 16' für die zweite Spannrolle 7 ist auf eine mit dem Trägerabschnitt 13 starr verbundene Lageraufnahme aufgezogen. Das Lager 16' ist mittels einer Schraube 27' mit dem Trägerabschnitt 13 verspannt. Obere und untere Scheiben 19, 19' verhindern ein Eindringen von Schmutz in die Lager 16, 16' der Spannrollen 5, 7.

Eine Besonderheit der vorliegenden Ausführungsform besteht in der Ausgestaltung der ersten Spannrollenanordnung, welche die erste Spannrolle 5 und den Verstellmechanismus 11 in einer kompakten Baueinheit umfasst.

Die erste Spannrolle 5 ist auf einem Lagerträger 17 des ersten Spannarms 4 um eine Drehachse A5 drehbar gelagert. Der Lagerträger 17 kann gegenüber dem Spannarm 4 mittels des Verstellmechanismus 11 verstellt und in der gewünschten Position fixiert werden. Durch Bewegen des Spannarms 4 relativ zum Lagerträger 17 wird die mit dem Spannarm verbundene erste Federabstützung 9 entsprechend relativ zur Spannrolle 5 in Umfangsrichtung bewegt. Je nach Bewegungsrichtung bewirkt dies ein Aufweiten oder Zuziehen der Feder 8, so dass die Federkraft und damit das vom Riemenspanner 2 erzeugbare Drehmoment verändert werden können.

Der Verstellmechanismus 11 umfasst ein Stellglied 18, das mit der Federabstützung 9 verbunden ist, ein Stützglied 19, das mit dem Lagerträger 17 verbunden ist, und ein Betätigungsglied 20 zum Verstellen des Stellglieds gegenüber dem Stützglied. Das Stützglied 19 ist einerseits gegen das Stellglied 18 und andererseits gegen das Betätigungsglied 20 in Umfangsrichtung abgestützt, was eine mittelbare Abstützung mit umfasst.

Bei der vorliegenden Ausführungsform ist das Stellglied 18 in Form eines sich vom Spannarm 4 axial abstehenden Ansatzes gestaltet, der eine sich in Umfangsrichtung erstreckende Führungskontur 22 aufweist. In die Führungskontur 22 greift der Lagerträger 17 mit einer hierzu passenden Gegenkontur 23 ein, so dass der Lagerträger 17 gegenüber dem Spannarm 4 in Umfangsrichtung beziehungsweise tangential in Bezug auf die Schwenkachse A4 geführt ist. Führungskontur 22 und Gegenkontur 23 sind vorliegend nach dem Nut-Feder-Prinzip gestaltet, ohne hierauf eingeschränkt zu sein.

Der Lagerträger 17 ist mit seinem oberen Ende mit dem Stützglied 18 verbunden, insbesondere über eine formschlüssige Verbindung. Hierfür hat der Lagerträger 17 Eingriffsmittel 24, die in eine passende Öffnung des Stützglieds 19 drehfest eingreifen. Durch die formschlüssige Verbindung wird erreicht, dass sich der Lagerträger 17 gemeinsam mit dem Stützglied 19 bewegt, wenn letzteres mittels des Betätigungsglieds 20 verstellt wird. Das Stützglied 19 ist vorliegend in Form einer Abdeckscheibe gestaltet, die auf einer oberen Stirnfläche ein Zahnstangensegment 25 aufweist, das mit einer entsprechenden Zahnstruktur 26 des Betätigungsglieds 20 zusammenwirkt. Die Abdeckscheibe 19 ist koaxial zum Lagerträger 17 und damit auch koaxial zur Spannrolle 5 angeordnet und deckt das Lager 16 nach oben hin ab, um ein Eindringen von Schmutz zu verhindern. An der unteren Seite der Spannrolle 5 ist eine weitere Abdeckscheibe 48 vorgesehen.

Das Betätigungsglied 20 ist vorliegend in Form einer Verzahnungsmutter gestaltet, die eine Außenverzahnung als Betätigungsstruktur aufweist sowie eine Außenkontur zur Einleitung eines Drehmoments, insbesondere einen Außensechskant. Das Betätigungsglied 20 hat eine zentrale Durchtrittsöffnung 43, durch die ein Befestigungselement 27 eingesteckt ist. Das Befestigungselement 27, welches in Form einer Schraube gestaltet ist (ohne hierauf eingeschränkt zu sein), ist durch die längliche Durchgangsöffnung des Lagerträgers 17 hindurchgeführt und in den Spannarm 4 eingeschraubt. Somit ist das Betätigungsglied 20 auf der Schraube 27 drehbar gelagert.

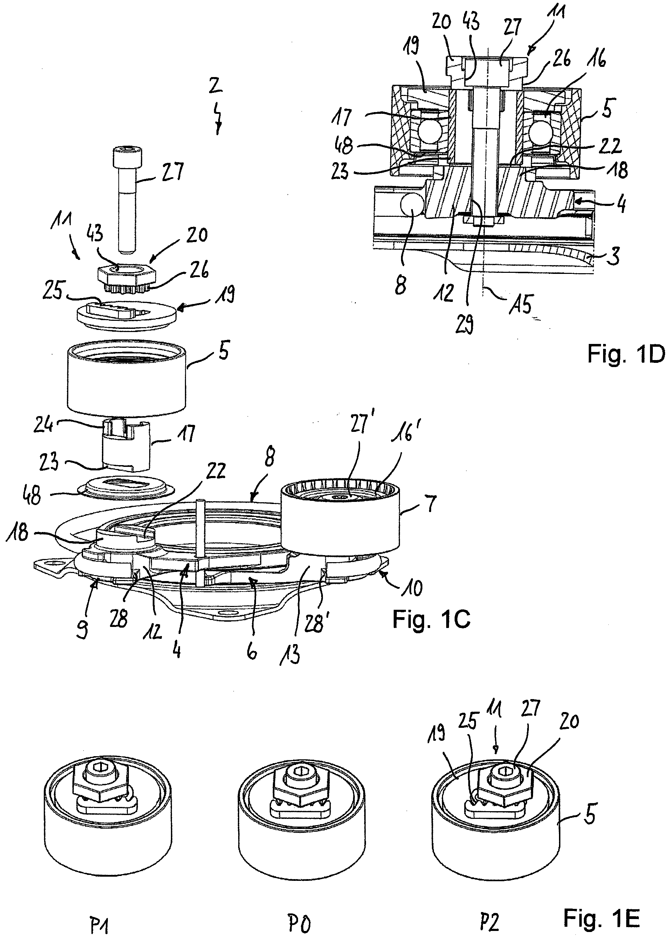

Ein Verdrehen des Betätigungsglieds 20 bewirkt durch die ineinandergreifenden Zähne 25, 26 eine relative Bewegung des Stützglieds 19, des hiermit verbundenen Lagerträgers 17 und der hiermit verbundenen Spannrolle 5 relativ zum Betätigungsglied 20 und dem hiermit über das Befestigungselement 27 verbundenen Spannarm 4 entlang der Führung 22, 23. Die Bewegung erfolgt etwa in Umfangsrichtung um die Schwenkachse A4. In Figur 1E sind verschiedene Stellpositionen gezeigt, in welche die Spannrolle 5 ausgehend von einer Mittelposition relativ zum Befestigungselement 27 verstellt werden kann. Eine mittlere Stellposition ist in der Mitte dargestellt. Wird das Betätigungsglied 20 hiervon ausgehend gegen den Uhrzeigersinn gedreht (linke Darstellung), wird das Befestigungselement 27 und mit diesem auch der hiermit verbundene Spannarm 4 entsprechend um die Schwenkachse A4 im Uhrzeigersinn von der Spannrolle 5 weggedrückt. Die Feder 8 weitet sich auf, so dass das von der Feder erzeugte Drehmoment erhöht wird. Wird das Betätigungsglied 20 ausgehend von der mittleren Stellung demgegenüber im Uhrzeigersinn gedreht (rechte Darstellung), wird das Befestigungselement 27 und mit diesem auch der hiermit verbundene Spannarm 4 entsprechend gegen den Uhrzeigersinn um die Schwenkachse A4 relativ zur Spannrolle 5 bewegt. Die Feder 8 schließt sich, so dass das von der Feder erzeugte Drehmoment reduziert wird.

Der Verstellmechanismus 11 ist so zu gestalten, dass der Verstellbereich zwischen den beiden Endpositionen P1, P2 hinreichend groß ist, um das erzeugbare Drehmoment der Riemenspannvorrichtung 2 unter Berücksichtigung aller Lage- und Fertigungstoleranzen der Bauteile der Riemenspanners auf das gewünschte Maß einzustellen. Beispielsweise kann der Verstellmechanismus 11 so ausgelegt sein, dass die erste Federabstützung 9 und die Spannrolle 5 gegeneinander um einen Winkelbereich β von bis zu 10° um die Schwenkachse A4 verstellbar sind. Insbesondere ist vorgesehen, dass die erste Federabstützung 9 und die Spannrolle 5 ausgehend von einer mittleren Ausgangslage (P0) um bis zu ± 5°um die Schwenkachse A4 in entgegengesetzte Endpositionen (P1, P2) verstellbar sind. Auf diese Weise können das Drehmoment der Feder 8 und damit die Trumkräfte nach Bedarf vergrößert oder verkleinert werden.

Die Verstellrichtung wird vorliegend durch die Führung 22, 23 zwischen dem Stellelement 18 und dem Lagerträger 17 definiert, welche hier gerade gestaltet ist und sich tangential zur Schwenkachse A4 erstreckt. Es versteht sich, dass die Verstellung auch ungerade, insbesondere bogenförmig, auch in Abweichung von einer Tangente erfolgen kann. Vorzugsweise ist der Verstellmechanismus 11 so gestaltet, dass die Verstellung zumindest im Wesentlichen in Umfangsrichtung erfolgt. Hiermit ist insbesondere gemeint, dass ein Bezugspunkt des ersten Spannarms 5, beispielsweise ein Anschlag 28 für die Feder 8 oder die Gewindebohrung 29 für die Befestigungsschraube 27, ausgehend von einer Ausgangslage (P0) eine Bewegungsrichtung hat, die in Axialansicht innerhalb eines Winkelbereichs γ von bis zu ± 10° relativ zu einer Tangente T0 um die Schwenkachse A4 liegt. Dabei kann die Tangente T0 definiert werden als eine Senkrechte zum Radius R von der Schwenkachse A4 zum Bezugspunkt.

Um die Einstellung des Soll-Drehmoments des Riemenspanners 2 bei der Endmontage im Riementrieb auf einfache Weise vornehmen zu können, erfolgt nach einer bevorzugten Verfahrensführung eine Voreinstellung im Rahmen der Montage und Prüfung des Riemenspanners 2. Diese wird nachstehend unter Bezugnahme auf den Riemenspanner 2 gemäß Figur 1 unter Hinzuziehung der Figuren 2 und 3 erläutert.

Zur reproduzierbaren Einstellung eines Soll-Drehmoments, das auch Nenn-Drehmoment bezeichnet wird, wird zunächst das tatsächliche Drehmoment M der Spannvorrichtung 2 über einem Schwenkwinkel α des Spannarms 4 beim Verschwenken gegen den zweiten Spannarm 6 gemessen. Es ergibt sich eine Drehmoment-Spannwinkel-Kennlinie Ispring für die jeweilige Spannvorrichtung 2, wie sie schematisch in Figur 2 gezeigt ist. Es ist erkennbar, dass das von der Spannvorrichtung 2 erzeugte Drehmoment M, das im Wesentlichen dem Federmoment entspricht, mit zunehmendem Schwenkwinkel a des Spannarms 4 in Richtung zweiter Federabstützung entsprechend zunimmt. Dabei ist mittels der Drehmoment-Spannwinkel-Kennlinie (Ispring) jedem relativen Schwenkwinkel a ein entsprechendes Drehmoment M zuordenbar. Zum Einstellen des gewünschten Soll-Drehmoments wird der Spannarm 4 in die zugehörige Schwenkposition (P0) beziehungsweise Winkelstellung (aset) überführt. In dieser Position wird eine Markierung 30 auf die Spannvorrichtung 2 aufgebracht, welche ermöglicht, dass der Spannarm reproduzierbar, ohne erneute Drehmomentmessung auf die gewünschte Winkelposition verschwenkt und das gewünschte Nennmoment Mset eingestellt werden kann. Die Markierung 30 ist in Figur 1B gezeigt; es ist erkennbar, dass diese in Form eines Striches gestaltet ist, der einen Abschnitt auf dem ersten Spannarm 4 und einen Abschnitt auf dem zweiten Spannarm 6 hat, wobei die beiden Strichabschnitte in der Soll-Winkelstellung aset miteinander fluchten. Das Soll-Drehmoment wird beispielsweise basierend auf den Leistungsdaten des Riementriebs ermittelt.

In einem nachfolgenden Schritt wird die Spannvorrichtung 2 in einen Riementrieb 32 eingebaut, wie beispielhaft in Figur 3 gezeigt. Hierfür wird die Spannvorrichtung 2 an einem ortsfesten Bauteil, vorliegend an ein Aggregat 33 angebracht, der Riemen 34 um alle Antriebsriemenscheiben 35, 36, 37 gelegt und die Spannrolle 5 unter Federvorspannung gegen den Riemen 38 beaufschlagt. Anschließend kann der Spannarm 4 mittels des Verstellmechanismus 11 relativ zur Spannrolle 5 verstellt werden, bis die den Soll-Schwenkwinkel aset repräsentierende Markierung 30 erreicht ist beziehungsweise die Markierungselemente miteinander fluchten. Es liegt nun das gewünschte Soll-Drehmoment Mset an. Das Aggregat 33 ist vorliegend in Form eines Generators (Lichtmaschine) gestaltet. Es ist das Gehäuse 39 des Generators erkennbar, das an einem Motorblock angeschlossen werden kann. Die Riemenspannvorrichtung 2 ist stirnseitig an dem Generator 33 angebracht. Dies erfolgt mittels der umfangsverteilten Befestigungsflansche 47, in welche Schrauben 40 eingesteckt und mit dem Gehäuse 39 des Generators verschraubt werden können. Es sind ferner der endlose Riemen 34 und die Riemenscheibe 35 erkennbar, die mit der Antriebswelle des Generators 33 drehfest verbunden ist. Der Grundkörper 3 beziehungsweise die Riemenspannvorrichtung 2 ist derart gestaltet, dass - in montiertem Zustand der Riemenspannvorrichtung 2 an das Aggregat 33 - die Schwenkachsen A4, A6 der Spannarme 4, 6 innerhalb des Außendurchmessers der Antriebswelle angeordnet sind.

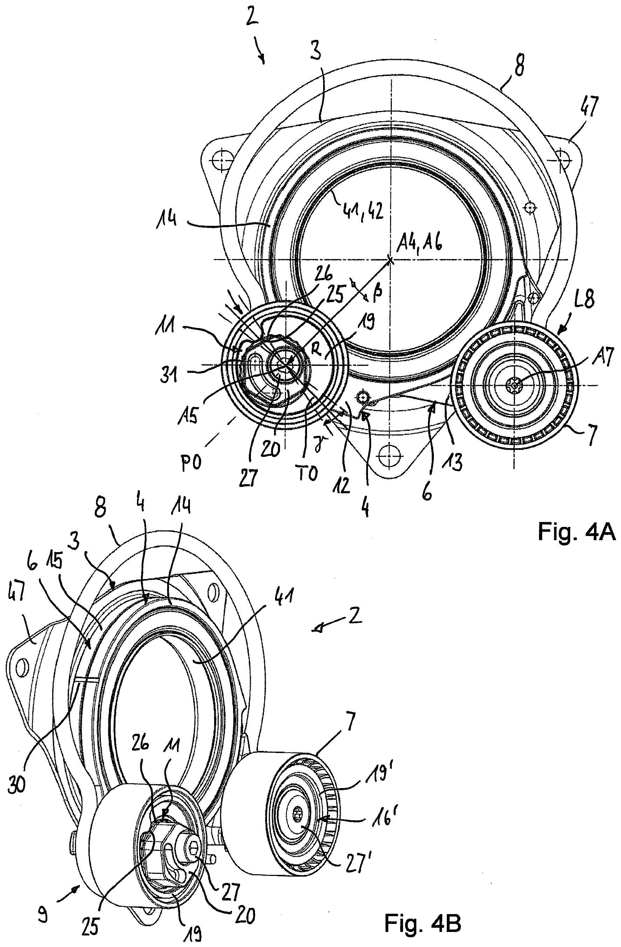

Die Figuren 4A bis 4D, welche nachstehend gemeinsam beschrieben werden, zeigen eine erfindungsgemäße Spannvorrichtung 2 in einer zweiten Ausführungsform. Die vorliegende Spannvorrichtung 2 entspricht weitestgehend der Ausführungsform gemäß den Figuren 1 bis 3, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen, wie in den Figuren 1 bis 3.

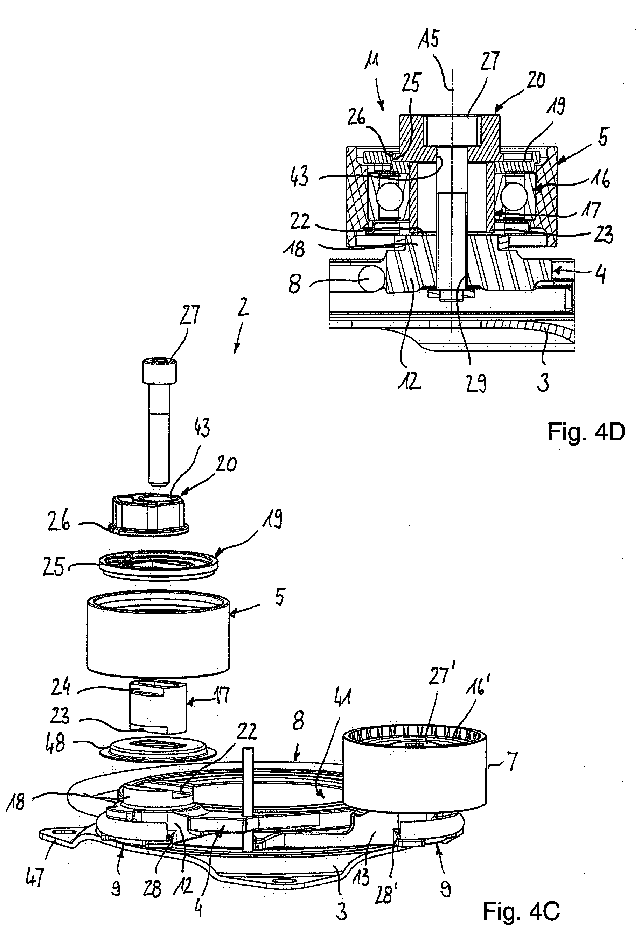

Der vorliegende Riemenspanner 2 gemäß Figur 4 unterscheidet sich von der obigen Ausführungsform in der Ausgestaltung des Verstellmechanismus 11, insbesondere des Stützglieds 19 und des Betätigungsglieds 20.

Das Betätigungsglied 20 ist vorliegend in Form einer Exzentermutter gestaltet, die eine Betätigungsstruktur 26 in Form einer Exzenterfläche aufweist, die exzentrisch zu der Durchgangsbohrung für die Schraube 27 angeordnet ist. Das Betätigungsglied 20 wirkt mit dem Stützglied 19 als Gegenbauteil zusammen, das in Form einer oberen Abdeckscheibe für die Spannrolle 5 gestaltet ist. Die Abdeckscheibe 19 hat eine Stützfläche 25, die mit der Exzenterfläche 26 in Kontakt ist. Beim Verdrehen der Exzentermutter 20 wandert die exzentrische Stellkurve 26 entlang der Stützfläche 25, so dass die Abdeckscheibe 19 relativ zur Schraube 27 in Bezug auf die Schwenkachse A4 etwa in Umfangsrichtung bewegt wird. Entsprechend werden der Lagerträger 17, welcher fest mit der Abdeckscheibe 19 verbunden ist, und die Spannrolle 5 relativ zur Schraube 27 und dem damit verbundenen Spannarm 4 entlang der zwischen dem Lagerträger 17 und dem Stellglied 18 gebildeten Führung 22, 23 bewegt. Je nach Drehrichtung der Exzentermutter 20 kann die exzentrische Stellkurve 26 ausgehend von einer mittleren Stellposition in Bereiche geringerer Radien oder größerer Radien verdreht werden, so dass die Feder 8 entsprechend aufgeweitet oder zugezogen werden kann.

Es ist insbesondere in Figur 4A erkennbar, dass zwischen der Exzentermutter 20 und der Abdeckscheibe 19 Rastmittel 31 vorgesehen sind. Die Rastmittel 31 sind durch eine Raststruktur an einer Außenfläche der Exzenterkurve 26 gestaltet, in welche die radial vorstehende Stützfläche 25 über dem Verdrehbereich der Exzentermutter 20 in Teilschritten rastend eingreifen kann. Somit wird die Exzentermutter 20 relativ zur Abdeckscheibe 19 in definierten Stellungen gehalten. Ein ungewünschtes Verdrehen nach Einstellung des Nenn-Spannwinkels aset wird somit verhindert.

Das Stellglied 18 ist wie bei der obigen Ausführungsform als vom Spannarm 4 axial abstehender Ansatz mit sich in Umfangsrichtung erstreckender Führungskontur 22 gestaltet. In die Führungskontur 22 greift der Lagerträger 17 mit der passenden Gegenkontur 23 ein, so dass der Lagerträger 17 gegenüber dem Spannarm 4 in Umfangsrichtung beziehungsweise tangential in Bezug auf die Schwenkachse A4 geführt ist. Die relative Bewegung zwischen Spannrolle 5 und Spannarm 4 erfolgt insofern analog zu der obigen Ausführungsform, auf deren Beschreibung verwiesen wird.

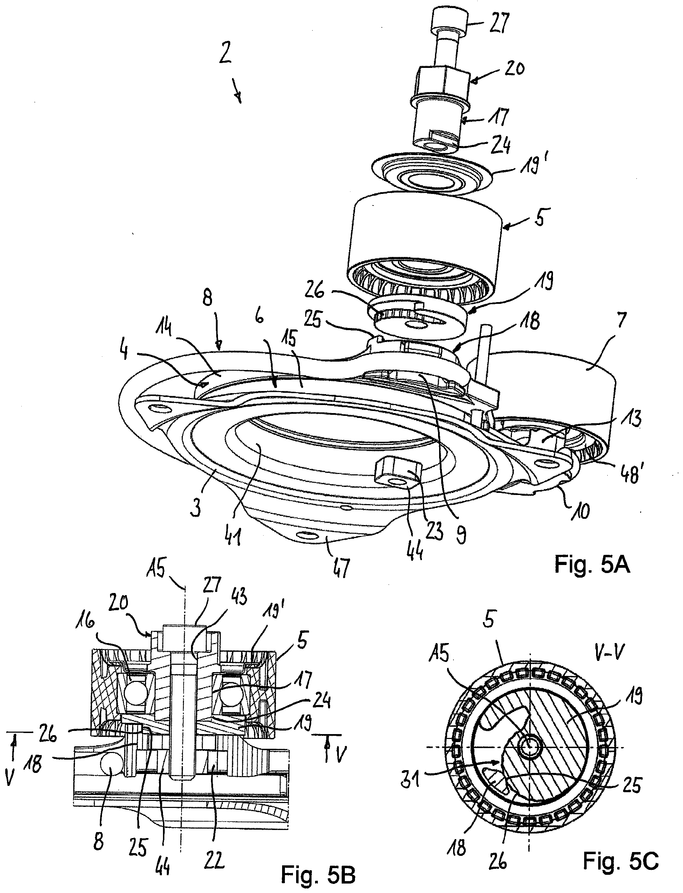

Die Figuren 5A bis 5C, welche nachstehend gemeinsam beschrieben werden, zeigen eine erfindungsgemäße Spannvorrichtung 2 in einer dritten Ausführungsform. Die vorliegende Spannvorrichtung 2 entspricht in weiten Teilen der Ausführungsform gemäß Figur 4, so dass hinsichtlich der Gemeinsamkeiten auf die obige Beschreibung zu Figur 4 und damit auch die Beschreibung zu den Figuren 1 bis 3 Bezug genommen wird. Dabei sind gleiche beziehungsweise einander entsprechende Bauteile mit gleichen Bezugszeichen versehen, wie in den Figuren 1 bis 4.

Der vorliegende Riemenspanner 2 gemäß Figur 5 unterscheidet sich von der obigen Ausführungsform in der Ausgestaltung des Verstellmechanismus 11, insbesondere des Stellglieds 18, des Stützglieds 19 und des Betätigungsglieds 20.

Das Betätigungsglied 20 ist vorliegend einteilig mit dem Lagerträger 17 gestaltet. Es sind Drehomenteinleitungsmittel in Form eines Außensechskants zur Einleitung eines Drehmoments in das Betätigungsglied 20 vorgesehen, ohne hierauf eingeschränkt zu sein. Das Betätigungsglied 20 hat eine Durchgangsbohrung 43, durch welche die Schraube 27 zum Verbinden mit dem Spannarm 4 durchgesteckt ist. Die Schraube 27 und das Trägerelement 17 sind koaxial zueinander beziehungsweise zur Drehachse A5 angeordnet. Auf das untere Ende der Schraube 27 ist eine Mutter 44 eingeschraubt, die gegenüber dem Stellglied 18 verdrehgesichert aber entlang der Führungsstruktur 22 des Stellglieds 18 in Umfangsrichtung zur Schwenkachse A4 verschiebbar gehalten ist. Dabei bildet die Außenfläche 23 der Mutter 44 die Gegenkontur der Führung.

Das Stützglied 19 ist vorliegend als untere Abdeckplatte gestaltet und sitzt folglich unterhalb des Lagers 16, beziehungsweise zwischen dem Lagerträger 17 und dem Stellglied 18. Die Abdeckplatte 19 hat eine Betätigungsstruktur 26 in Form einer Exzenterfläche, die exzentrisch zur Durchgangsbohrung für die Schraube 27 angeordnet ist. Die Abdeckplatte 19 wirkt mit dem Stellglied 18 als Gegenbauteil zusammen, um den Spannarm 4 relativ zur Spannrolle 5 zu verstellen. Das Stellglied 18 ist einteilig mit dem Spannarm 4 verbunden und hat eine Stützfläche 25, die mit der Exzenterfläche 26 der Abdeckscheibe 19 in Kontakt ist. Die Abdeckscheibe 19 ist über Formschlussmittel 24 drehfest mit dem Trägerelement 17 beziehungsweise dem Betätigungsglied 20 verbunden.

Beim Verdrehen des dem Betätigungsglieds 20 wandert die exzentrische Stellkurve 26 der Abdeckscheibe 19 entlang der zum Spannarm 4 ortsfesten Stützfläche 25 des Stellglieds 18, so dass das Stellglied 18 relativ zur Abdeckscheibe 19 beziehungsweise zur Schraube 27 in Bezug auf die Schwenkachse A4 etwa in Umfangsrichtung bewegt wird. Entsprechend werden der Lagerträger 17, welcher fest mit der Abdeckscheibe 19 verbunden ist, und die Spannrolle 15 relativ zum Stellelement 18 und dem damit verbundenen Spannarm 4 entlang der zwischen dem Stellelement 18 und der Mutter 44 gebildeten Führung 22, 23 bewegt. Je nach Drehrichtung des Betätigungsglieds 20 und der damit drehfest verbundenen Abdeckscheibe 19 kann die exzentrische Stellkurve 26 ausgehend von einer mittleren Stellposition in Bereiche geringerer Radien oder größerer Radien verdreht werden, so dass die Feder 8 entsprechend aufgeweitet oder zugezogen werden kann.

Wie insbesondere in Figur 5C erkennbar, sind auch bei der vorliegenden Ausführungsform Rastmittel 31 vorgesehen. Die Rastmittel 31 sind durch eine Raststruktur an der Exzenterkurve 26 des Stützelements 19 gestaltet, in welche die radial vorstehende Gegenfläche 25 über dem Verdrehbereich des Stützelements 19 in Teilschritten rastend eingreifen kann. Somit wird die Abdeckscheibe 19 relativ zum Stellelement 18 in definierten Drehstellungen gehalten.

Das Stellglied 18 hat eine sich in Umfangsrichtung erstreckende Führungskontur 22, die in Form einer länglichen Ausnehmung gestaltet ist. In die Führungskontur 22 greift die Mutter 44 mit der passenden Gegenkontur 23 ein, so dass der Lagerträger 17 gegenüber dem Spannarm 4 in Umfangsrichtung beziehungsweise tangential in Bezug auf die Schwenkachse A4 geführt ist. Die relative Bewegung zwischen Spannrolle 5 und Spannarm 4 erfolgt insofern analog zu der obigen Ausführungsform, auf deren Beschreibung verwiesen wird.

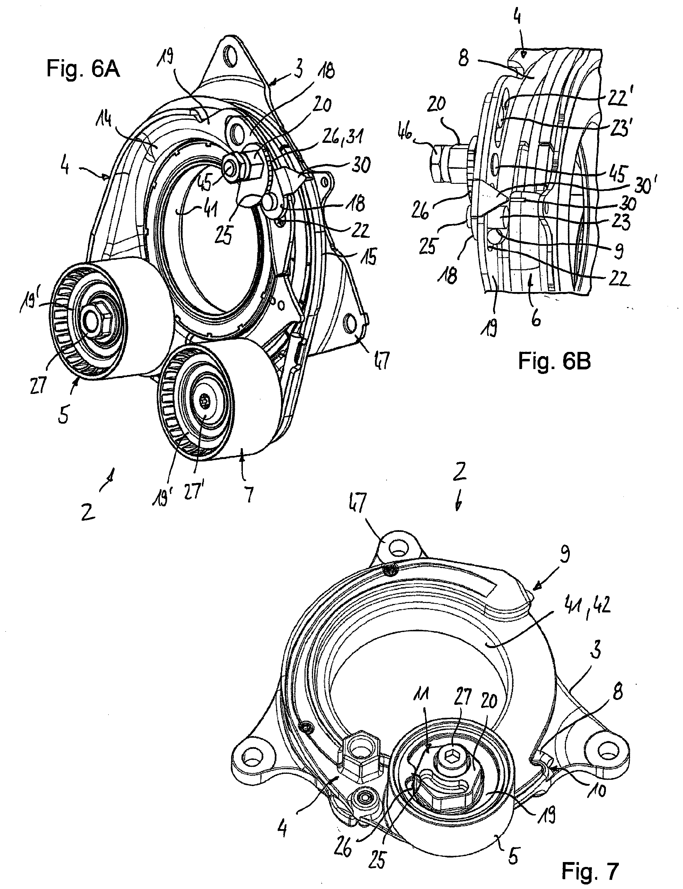

Die Figuren 6A und 6B, welche nachstehend gemeinsam beschrieben werden, zeigen eine erfindungsgemäße Spannvorrichtung 2 in einer weiteren Ausführungsform. Die vorliegende Spannvorrichtung 2 entspricht in weiten Teilen der Ausführungsform gemäß Figur 1, so dass hinsichtlich der Gemeinsamkeiten auf die obige Beschreibung zu Figur 1 und damit auch die Beschreibung zu den Figuren 2 und 3 Bezug genommen wird. Dabei sind gleiche beziehungsweise abgewandelte Einzelheiten mit gleichen Bezugszeichen versehen, wie in den obigen Figuren.

Bei der vorliegenden Ausführungsform ist der Verstellmechanismus 11 nicht im Bereich der Spannrolle, sondern in einem hierzu umfangsversetzten Bereich zwischen den beiden Spannrollen 5, 7 angeordnet.

Der Verstellmechanismus 11 umfasst wie bei den obigen Ausführungsformen ein Stellglied 18, das mit der Federabstützung 9 verbunden ist, ein Stützglied 19, das mit dem Lagerträger 17 verbunden ist, und ein Betätigungsglied 20 zum Verstellen des Stellglieds 18 relativ zum Stützglied 19. Das Stützglied 19 ist einerseits gegen das Stellglied 18 und andererseits gegen das Betätigungsglied 20 in Umfangsrichtung abgestützt, was eine mittelbare Abstützung mit umfassen soll.

Bei der vorliegenden Ausführungsform hat das Betätigungsglied 20 einen Hülsenabschnitt, mit dem das Betätigungselement 20 auf einem Gewindestift 45 drehbar gelagert ist, und eine Betätigungsstruktur 26 in Form einer Exzenterfläche. Der Gewindestift 45 ist mit einem ersten Ende an dem Stützelement 19 fixiert. An dem entgegengesetzten zweiten Ende ist ein Schraubgewinde vorgesehen, auf das eine Spannmutter 46 aufgeschraubt ist. In gelöstem Zustand der Spannmutter 46 kann die Betätigungshülse 20 und das damit verbundene Stellelement 18 verdreht werden. Durch Anziehen der Spannmutter 46 wird die zwischen der Mutter 46 und dem Stellelement 18 angeordnete Betätigungshülse 20 verspannt und damit verdrehgesichert. Zur Drehmomenteinleitung hat die Betätigungshülse 20 einen Außensechskant, wobei auch andere Drehmomentkonturen möglich sind.

Die Exzenterfläche 26, welche exzentrisch zum Gewindestift 45 angeordnet ist, wirkt mit dem Stellelement 18 als Gegenbauteil zusammen, um dieses in Umfangsrichtung relativ zum Stützelement 18 zu bewegen. Das Stellelement 18 ist in Form eines Ringsegments gestaltet, das über Führungsmittel 22, 23; 22', 23' gegenüber dem Stützelement 19 in Umfangsrichtung begrenzt beweglich geführt ist. Das Ringsegment 18 hat an einer zur Führung entgegengesetzten Seite einen axialen Vorsprung 25, der das Gegenelement bildet, gegen welche die exzentrische Stellfläche 26 abgestützt ist. Zur Führung in Umfangsrichtung hat das Ringsegment 18 ein erstes Führungselement 23 in Form eines axialen Vorsprungs, der in ein erstes Langloch 22 des Stützelements 19 eingreift, sowie hierzu umfangsversetztes zweites Führungselement 23' in Form eines axialen Vorsprungs, der in ein zweites Langloch 22' des Stützelements 19 eingreift. Das erste Führungselement 23 ist länger als das zweite und erstreckt sich mit einem Abschnitt durch das Langloch 22 hindurch. Der überstehende Abschnitt des Führungselements 23 bildet die erste Federabstützung 9, gegen welche die Feder 8 mit einem radial abgekröpften Endabschnitt in Umfangsrichtung abgestützt ist.

Das Stützglied 19 ist integraler Bestandteil des ersten Spannarms 4, der über die Feder 8 in Umfangsrichtung gegen den zweiten Spannarm 6 federnd abgestützt, wobei der erste Spannarm 4 mit der zugehörigen ersten Federabstützung 9 mittels des Verstellmechanismus 11 gegenüber dem zweiten Spannarm 5 und der zugehörigen zweiten Federabstützung 10 in Umfangsrichtung verstellbar ist. Durch Verdrehen der Betätigungshülse 20 wird die exzentrische Stellkurve 26 relativ zur Gegenfläche 25 des Ringsegments 18 verdreht, so dass das Ringsegment 18 relativ zum Gewindestift 45 in Umfangsrichtung in Bezug auf die Schwenkachse A4 bewegt. Entsprechend wird das Ringsegment 18 und die hiermit verbundene Federabstützung 9 relativ zum Gewindestift 45 und dem damit verbundenen Spannarm 4 entlang der zwischen dem Stützelement 19 und dem Ringsegment 18 gebildeten Führungen 22, 23; 22', 23' bewegt. Je nach Drehrichtung der Betätigungshülse 20 kann die exzentrische Stellkurve 26 ausgehend von einer mittleren Stellposition in Bereiche geringerer Radien oder größerer Radien verdreht werden, so dass die Feder 8 entsprechend aufgeweitet oder zugezogen werden kann. Die relative Bewegung zwischen Spannrolle 5 und Spannarm 4 erfolgt analog zu der obigen Ausführungsform, auf deren Beschreibung verwiesen wird.

Es ist in Figur 6B ferner ein Markierungselement 30' erkennbar, das in Form eines vom Ringsegment 18 axial abgebogenen Dreiecks gestaltet ist. Nach Einstellung der gewünschten Winkelposition aset, in der das Nenndrehmoment Mset vorliegt, wird im Rahmen der Voreinstellung eine Gegenmarkierung 30 am gegenüberliegenden Spannarm 6 gemacht. Bei der Endmontage kann das Nennmoment Mset somit auf einfache Weise dadurch eingestellt werden, dass die Betätigungshülse derart verdreht wird, bis das Markierungselement 30' der Gegenmarkierung 30 gegenüberliegt.

Die Figur 7 zeigt eine erfindungsgemäße Spannvorrichtung 2 in einer weiteren Ausführungsform. Die vorliegende Spannvorrichtung 2 entspricht in weiten Teilen der Ausführungsform gemäß Figur 4, auf deren Beschreibung und damit auch der Beschreibung zu den Figuren 1 bis 3 hinsichtlich der Gemeinsamkeiten abkürzend Bezug genommen wird. Dabei sind gleiche beziehungsweise abgewandelte Einzelheiten mit gleichen Bezugszeichen versehen, wie in den obigen Figuren.

Die Spannvorrichtung gemäß der vorliegenden Ausführungsform hat nur einen einzigen Spannarm 4 mit entsprechender Spannrolle 5. Die erste Federabstützung 9 ist, wie bei den obigen Ausführungsformen, dem ersten Spannarm 4 zugeordnet. Die zweite Federabstützung 10 ist dem Grundkörper 3 zugeordnet beziehungsweise an diesem ausgebildet (und nicht, wie bei den obigen Ausführungsformen am zweiten Spannarm).

Hinsichtlich aller übrigen Einzelheiten zum Aufbau und Funktionsweise entspricht die Spannvorrichtung nach Figur 7 derjenigen gemäß Figur 4, auf deren Beschreibung hier unter Einbezug der Beschreibung zu den Figuren 1 bis 3 abkürzend verwiesen wird.

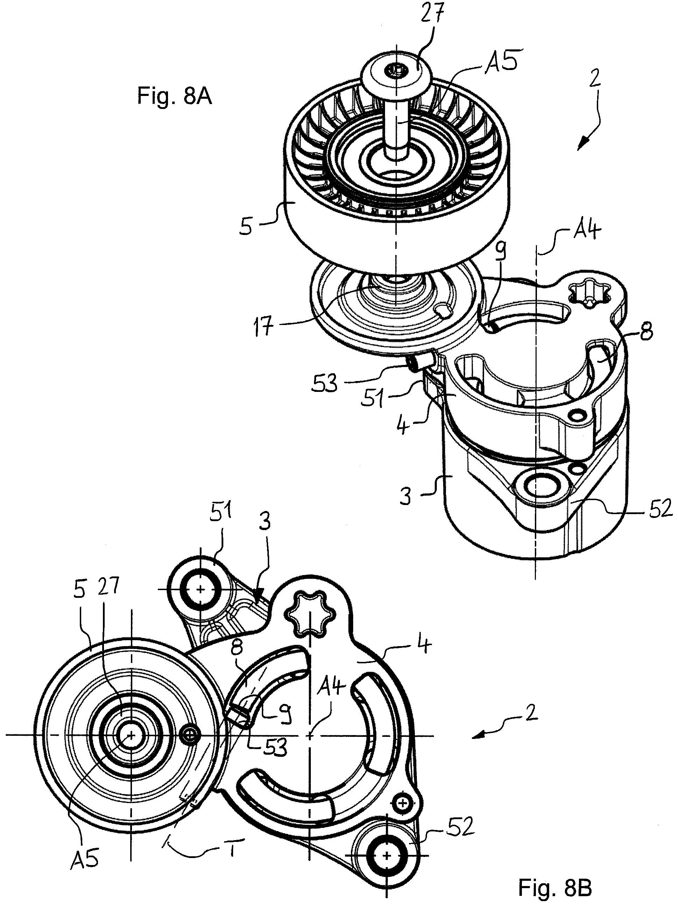

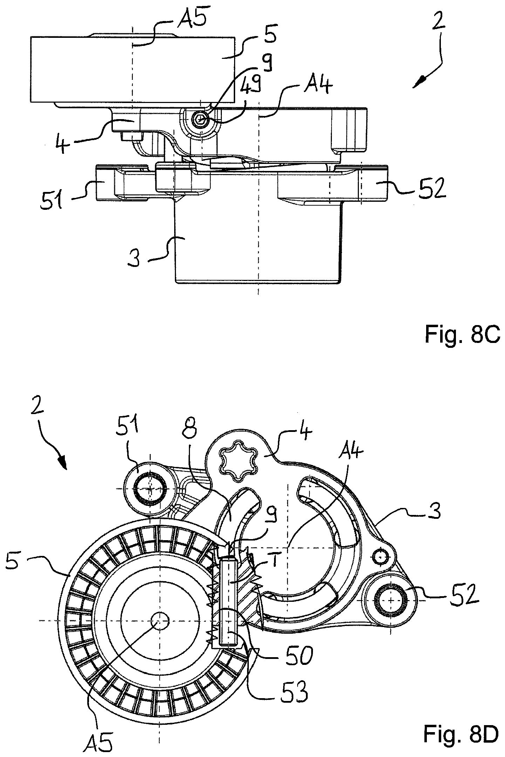

Die Figuren 8A bis 8D zeigen eine erfindungsgemäße Riemenspannvorrichtung 2 in einer weiteren Ausführungsform. Bei der gezeigten Spannvorrichtung 2 handelt es sich, ebenso wie bei der Spannvorrichtung gemäß Figur 7, um einen Einarmspanner und entspricht in weiten Teilen der Ausführungsform gemäß Figur 7, wobei auf die Beschreibung der Ausführungsformen gemäß Figur 7 und damit auch der Beschreibung zu den Figuren 1 bis 4 hinsichtlich der Gemeinsamkeiten abkürzend Bezug genommen wird. Dabei sind gleiche beziehungsweise abgewandelte Einzelheiten mit gleichen Bezugszeichen versehen, wie in den obigen Figuren.

Die Riemenspannvorrichtung 2 weist einen Grundkörper 3 in Form eines Aufnahmegehäuses für die Federmittel 8 auf, die als Schraubenfeder gestaltet sind. An dem Grundkörper 3 ist ein Spannarm 4 um die Schwenkachse A4 drehbar angeordnet. Der Spannarm 4 trägt an einem freien Ende und exzentrisch zur Schwenkachse A4 die Spannrolle 5, die auf dem Lagerträger 17 des Spannarms 4 drehbar gelagert ist. Der Grundkörper 3 kann an einem ortsfesten Bauteil wie einem Aggregat oder Motorblock (nicht dargestellt) oder einem hiermit verbundenen Bauteil befestigt werden. Zur Befestigung des Grundkörper 3 hat dieser mehrere nach radial außen vorstehende Befestigungsabschnitte 51, 52 mit Bohrungen, durch welche Schrauben beziehungsweise Bolzen zur Befestigung an dem ortsfesten Bauteil durchgesteckt werden können.

Die Federmittel 8 sind einerseits gegen eine erste Federabstützung 9 des Spannarms 4 abgestützt. Die erste Federabstützung 9 umfasst hierbei einen Gewindestift 53, der in eine Gewindebohrung 50 des Spannarms 4 eingeschraubt ist. Die Federmittel 8 sind im Wesentlichen tangential gegen den Gewindestift 53 abgestützt. Der Gewindestift 53 weist einen Innensechskant 49 auf, über den der Gewindestift 53 mittels eines entsprechenden Werkzeugs in Richtung einer Tangente T mehr oder weniger tief in die Gewindebohrung 50 eingeschraubt werden. Hierdurch ändert sich die tangentiale Position der ersten Federabstützung 9, insbesondere der Kontaktstelle zwischen dem Gewindestift 53 und den Federmitteln8, relativ zum Lagerträger 17 und der Spannrolle 5.

Die Federmittel 8 sind gegen eine im Grundkörper 3 angeordnete (hier nicht dargestellte) zweite Federabstützung tangential und damit in Umfangsrichtung bezogen auf die Schwenkachse A4 abgestützt. Bei ortsfest zum Grundkörper 3 gehaltenem Spannarm 4 bzw. ortsfest zum Grundkörper 3 gehaltener Spannrolle 5, wie dies im montierten Zustand des Riemenspanners 2 in einem Zugmitteltrieb der Fall ist, werden somit die Federmittel 8 in Umfangsrichtung mehr oder weniger vorgespannt. Dies wird dadurch erzielt, dass sich durch das Verstellen des Gewindestifts 53 und damit durch Verstellen der Federabstützung 9 die Länge bzw. der Abstand zwischen der ersten Federabstützung 9 und der zweiten Federabstützung in Umfangsrichtung ändert.

### Bezugszeichenliste

- 2: Riemenspannvorrichtung
- 3: Grundkörper
- 4: erster Spannarm
- 5: erste Spannrolle
- 6: zweiter Spannarm
- 7: zweite Spannrolle
- 8: Feder
- 9: Federabstützung
- 10: Federabstützung
- 11: Verstellmechanismus
- 12: Trägerabschnitt
- 13: Trägerabschnitt
- 14: Lagerabschnitt
- 15: Lagerabschnitt
- 16, 16': Lager
- 17: Lagerträger
- 18: Stellglied
- 19: Stützglied
- 20: Betätigungsglied
- 21: Durchgangsöffnung
- 22: Führungskontur
- 23: Gegenkontur
- 24: Eingriffsmittel
- 25: Stützstruktur
- 26: Betätigungsstruktur
- 27: Befestigungselement
- 28,28': Anschlag
- 29: Gewindebohrung
- 30: Markierung
- 31: Rastmittel
- 32: Riementrieb
- 33: Aggregat
- 34: Riemen
- 35: Riemenscheibe
- 36: Riemenscheibe
- 37: Riemenscheibe
- 38: Riemen
- 39: Gehäuse
- 40: Schraube
- 41: Öffnung
- 42: Öffnung
- 43: Durchgangsbohrung
- 44: Mutter
- 45: Gewindestift
- 46: Spannmutter
- 47: Befestigungsabschnitt
- 48: Abdeckscheibe
- 49: Innensechskant
- 50: Gewindebohrung
- 51: Befestigungsabschnitt
- 52: Befestigungsabschnitt
- 53: Gewindestift

- a, β, γ: Winkel
- A: Achse
- L: Länge
- M: Moment
- P: Position
- R: Radius
- T: Tangente

## Patentansprüche

1. Spannvorrichtung für einen Zugmitteltrieb, umfassend:
einen Grundkörper (3);
zumindest einen Spannarm (4, 6), der relativ zum Grundkörper (3) um eine Schwenkachse (A4, A6) schwenkbar gelagert ist und eine Spannrolle (5, 7) aufweist, die auf einem Lagerträger (17) des Spannarms (4, 6) drehbar gelagert ist;
Federmittel (8) zum federnden Beaufschlagen des Spannarms (4, 6), wobei sich die Federmittel (8) zwischen einer ersten Federabstützung (9) des Spannarms (4) und einer zweiten Federabstützung (10) der Spannvorrichtung um die Schwenkachse (A4, A6) erstrecken,
**gekennzeichnet durch** einen Verstellmechanismus (11) zum Verstellen der ersten Federabstützung (9) gegenüber dem Lagerträger (17) der Spannrolle (5) in Umfangsrichtung um die Schwenkachse (A4, A6), so dass im montierten Zustand der Spannvorrichtung der Winkel zwischen der ersten Federabstützung (9) und der zweiten Federabstützung (10) bezogen auf die Schwenkachse (A4, A6) und damit die Federvorspannkraft der Federmittel (8) veränderbar ist.

2. Spannvorrichtung nach Anspruch 1,
**dadurch gekennzeichnet,**
**dass** der Verstellmechanismus (11) ein Stellglied (18) aufweist, das mit der ersten Federabstützung (9) starr verbunden ist, und ein Stützglied (19), das mit dem Lagerträger (17) starr verbunden ist, wobei das Stellglied (18) gegenüber dem Stützglied (19) in Umfangsrichtung um die Schwenkachse (A4, A6) verstellbar geführt ist, sowie ein Betätigungsglied (20) zum Verstellen des Stellglieds (18) gegenüber dem Stützglied (19).

3. Spannvorrichtung nach Anspruch 2,
**dadurch gekennzeichnet,**
**dass** Rastmittel (31) im Kraftübertragungspfad zwischen dem Betätigungsglied (20) und dem Stellglied (18) vorgesehen sind, welche ausgestaltet sind, um das Stellglied (18) gegenüber dem Stützglied (19) in definierten Stellungen zu halten.

4. Spannvorrichtung nach einem der Ansprüche 1 bis 3,
**dadurch gekennzeichnet,**
**dass** die erste Federabstützung (9) und die Spannrolle (5) gegeneinander um bis zu 10° um die Schwenkachse (A4, A6) verstellbar sind, insbesondere um bis zu ± 5° ausgehend von einer Ausgangslage (P0).

5. Spannvorrichtung nach einem der Ansprüche 1 bis 4,
**dadurch gekennzeichnet,**
**dass** zwischen der ersten Federabstützung (9) und den Federmitteln (8) ein Anschlag (28) gebildet ist, wobei eine Tangente (T0) durch den Anschlag (28) definierbar ist als Senkrechte zum Radius (R) von der Schwenkachse (A4, A6) zum Anschlag (28),
wobei der Verstellmechanismus (11) so gestaltet ist, dass der Anschlag (28) ausgehend von einer Ausgangslage (P0) eine Bewegungsrichtung hat, die in Axialansicht innerhalb eines Winkelbereichs (γ) von bis zu ± 10° relativ zur Tangente (T0) liegt.

6. Spannvorrichtung nach einem der Ansprüche 1 bis 5,
**dadurch gekennzeichnet,**
**dass** der Lagerträger (17) eine sich in Umfangsrichtung länglich erstreckende axiale Durchgangsöffnung (21) aufweist.

7. Spannvorrichtung nach einem der Ansprüche 2 bis 6,
**dadurch gekennzeichnet,**
**dass** das Betätigungsglied (20) am Spannarm (4) ortsfest und drehbar befestigt ist und eine Betätigungsstruktur (26) aufweist, die mit einer Gegenstruktur (25) eines mit dem Lagerträger (17) zur gemeinsamen Bewegung verbundenen Gegenbauteils (19) zusammenwirkt, derart, dass ein Verdrehen des Betätigungsglieds (20) und der damit drehfest verbundenen Betätigungsstruktur (26) eine Umfangsbewegung des Spannarms (4) relativ zum Lagerträger (17) in Umfangsrichtung um die Schwenkachse (A4, A6) bewirkt.
(Figuren 1 bis 6)

8. Spannvorrichtung nach Anspruch 7,
**dadurch gekennzeichnet,**
**dass** das Betätigungsglied (20) eine Zahnstruktur als Betätigungsstruktur (26) aufweist, die mit einem Zahnsegment (25) des Gegenbauteils (19) zusammenwirkt, wobei das Gegenbauteil (19) eine obere Abdeckscheibe für die Spannrolle (5) ist.
(Figur 1)

9. Spannvorrichtung nach Anspruch 7,
**dadurch gekennzeichnet,**
**dass** das Betätigungsglied (20) eine Exzenterflächenstruktur als Betätigungsstruktur (26) aufweist, die mit einer Gegenfläche (25) des Gegenbauteils (19) zusammenwirkt, wobei das Gegenbauteil (19) eine obere Abdeckscheibe für die Spannrolle (5) ist.
(Figur 4)

10. Spannvorrichtung nach Anspruch 7,
**dadurch gekennzeichnet,**
**dass** das Betätigungsglied (20) mit dem Lagerträger (17) fest verbunden ist, und der Lagerträger (17) mit dem Stellglied (19) drehfest verbunden ist, wobei das Stellglied (19) in Form einer unteren Abdeckscheibe für die Spannrolle (5) gestaltet ist und die Betätigungsstruktur (26) an der unteren Abdeckscheibe in Form einer Exzenterflächenstruktur gebildet ist,
wobei die Gegenstruktur (25) in Form einer Gegenfläche am Stützglied (18) gebildet ist, an der die Exzenterflächenstruktur abgestützt ist.
(Figur 5)

11. Spannvorrichtung nach einem der Ansprüche 1 bis 10,
**dadurch gekennzeichnet,**
**dass** der zumindest eine Spannarm (4, 6) und der Grundkörper (3) jeweils eine Öffnung (41, 42) aufweisen, in die sich eine Antriebswelle und/oder Riemenscheibe (35) eines Aggregats (33) in montiertem Zustand hinein erstrecken kann.

12. Spannvorrichtung nach einem der Ansprüche 1 bis 11,
**dadurch gekennzeichnet,**
**dass** die Federmittel (8) in Form einer Biegefeder gestaltet ist, die sich in Umfangsrichtung um die Schwenkachse (A4, A6) zwischen der ersten Federabstützung (9) und der zweiten Federabstützung (10) erstreckt und eine Umfangserstreckung von insbesondere weniger als 980°, vorzugsweise weniger als 720°, gegebenenfalls weniger als 360° aufweist.

13. Spannvorrichtung nach einem der Ansprüche 1 bis 12,
**dadurch gekennzeichnet,**
**dass** nur ein Spannarm (4) vorgesehen ist, wobei die zweite Federabstützung (10), gegen die sich die Federmittel (8) in Umfangsrichtung abstützen, dem Grundkörper (3) zugeordnet ist.

14. Spannvorrichtung nach einem der Ansprüche 1 bis 12,
**dadurch gekennzeichnet,**
**dass** der zumindest eine Spannarm einen ersten Spannarm (4) und einen zweiten Spannarm (6) umfasst, wobei der erste Spannarm (4) um eine erste Schwenkachse (A4) schwenkbar gelagert ist und eine erste Spannrolle (5) aufweist und wobei der zweite Spannarm (6) um eine zweite Schwenkachse (A6) schwenkbar gelagert ist und eine zweite Spannrolle (7) aufweist, und dass die zweite Federabstützung (10), gegen die sich die Federmittel (8) in Umfangsrichtung abstützen, dem zweiten Spannarm (6) zugeordnet ist, so dass die beiden Spannarme (4, 6) über die Federmittel (8) in Umfangsrichtung relativ zueinander federnd abgestützt sind.

15. Verfahren zum Einstellen des Drehmoments einer Spannvorrichtung (2), nach einem der Ansprüche 1 bis 14, mit folgenden Schritten:
Festlegen eines Soll-Drehmoments (Mset), das die Spannvorrichtung (2) in montiertem Zustand aufweisen soll;
Messen des tatsächlichen Drehmoments (M) der Spannvorrichtung (2) über einem Schwenkwinkel (a) des Spannarms (4) beim Verschwenken des Spannarms (4) relativ zu dem Bauteil (3, 6), gegen das die Federmittel (8) abgestützt sind;
Verschwenken des Spannarms (4) relativ zu dem Bauteil (3, 6) bis zu einem Soll-Schwenkwinkel (aset), in dem das Soll-Drehmoment (Mset) anliegt;
Aufbringen einer den Soll-Schwenkwinkel (aset) repräsentierenden Markierung (30, 30') auf der Spannvorrichtung (2).

16. Verfahren nach Anspruch 15,
**gekennzeichnet durch** die weiteren Schritte:
Einbauen der Spannvorrichtung (2) in einen Riementrieb (32) und
Verstellen des Spannarms (4) relativ zur Spannrolle (5) mittels des Verstellmechanismus (11) bis zum Erreichen der den Soll-Schwenkwinkel (aset) repräsentierenden Markierung (30).

## Claims

1. Tensioning device for a traction drive, comprising:
a base member (3);
at least one tensioning arm (4, 6) which is pivotably supported relative to the base member (3) about a pivot axis (A4, A6) and comprises a tensioning roller (5, 7) which is rotatably supported on a bearing carrier (17) of the tensioning arm (4, 6);
spring means (8) for resiliently loading the tensioning arm (4, 6), wherein the spring means (8) extend between a first spring support (9) of the tensioning arm (4) and a second spring support (10) of the tensioning device about the pivot axis (A4, A6),
**characterised by** an adjusting mechanism (11) for adjusting the first spring support (9) relative to the bearing carrier (17) of the tensioning roller (5) in circumferential direction about the pivot axis (A4, A6), so that in the mounted state of the tensioning device the angle between the first spring support (9) and
the second spring support (10) with respect to the pivot axis (A4, A6) and thus the spring pre-tensioning force of the spring means (8) is adjustable.

2. Tensioning device according to claim 1,
**characterised in**
**that** the adjusting mechanism (11) has a setting element (18), which is rigidly connected to the first spring support (9), and a supporting element (19), which is rigidly connected to the bearing carrier (17), wherein the setting element (18) is adjustably guided in circumferential direction about the pivot axis (A4, A6) relative to the supporting element (19), and an actuating element (20) for adjusting the setting element (18) relative to the supporting element (19).

3. Tensioning device according to claim 2,
**characterised in**
**that** engagement means (31) are provided in the force transmission path between the actuating element (20) and the setting element (18), which are configured to hold the setting element (18) in defined positions with respect to the supporting element (19).

4. Tensioning device according to any of claims 1 to 3,
**characterised in**
**that** the first spring support (9) and the tensioning roller (5) are adjustable relative to each other up to 10º about the pivot axis (A4, A6), in particular up to ± 5º starting from a starting position (P0).

5. Tensioning device according to any of claims 1 to 4,
**characterised in**
**that** a stop (28) is formed between the first spring support (9) and the spring means (8), wherein a tangent (T0) through the stop (28) is definable as a perpendicular to the radius (R) from the pivot axis (A4, A6) to the stop (28), wherein the adjusting mechanism (11) is formed such that, starting from a starting position (P0), the stop (28) has a direction of movement, in axial view, lies within an angle range (γ) of up to ± 10º relative to the tangent (T0).

6. Tensioning device according to any of claims 1 to 5,
**characterised in**
**that** the bearing carrier (17) has an axial through opening (21) extending elongated in circumferential direction.

7. Tensioning device according to any of claims 2 to 6,
**characterised in**
**that** the actuating element (20) is attached stationarily and rotatably to the tensioning arm (4) and has an actuating structure (26), which interacts with a counter-structure (25) of a counter-component (19) connected to the bearing carrier (17) for moving together such, that rotation of the actuating element (20) and of the actuating structure (26) connected thereto in a rotationally fixed manner, causes a circumferential movement of the tensioning arm (4) relative to the bearing carrier (17) about the pivot axis (A4, A6).
(Figures 1 to 6)

8. Tensioning device according to claim 7,
**characterised in**
**that** the actuating element (20) has a toothed structure as actuating structure (26), which interacts with a tooth segment (25) of the counter-component (19), wherein the counter-component (29) is an upper cover disc for the tensioning roller (5).
(Figure 1)

9. Tensioning device according to claim 7,
**characterised in**
**that** the actuating element (20) has an eccentric face structure as actuating structure (26), which interacts with a counter-face (25) of the counter-component (19), wherein the counter-component (19) is an upper cover disc for the tensioning roller (5).
(Figure 4)

10. Tensioning device according to claim 7,
**characterised in**
**that** the actuating element (20) is firmly connected to the bearing carrier (17), and the bearing carrier (17) is non-rotatably connected to the setting element (19), wherein the setting element (19) is designed in form of a lower cover disc for the tensioning roller (5) and the actuating structure (26) is formed on the lower cover disc in form of an eccentric face structure,
wherein the counter-structure (25) is designed in form of a counter-face on the supporting element (18), on which the eccentric face structure is supported.
(Figure 5)

11. Tensioning device according to any of claims 1 to 10,
**characterised in**
**that** the at least one tensioning arm (4, 6) and the base member (3) each have an opening (41, 42) into which a drive shaft and/or a pulley (35) of an accessory (33) can extend in the mounted condition.

12. Tensioning device according to any of claims 1 to 11,
**characterised in**
**that** the spring means (8) are designed in the form of a bending spring, which extends in circumferential direction about the pivot axis (A4, A6) between the first spring support (9) and the second spring support (10) and has a circumferential extension of in particular less than 980º, in particular less than 720º, optionally less than 360º.

13. Tensioning device according to any of claims 1 to 12,
**characterised in**
**that** only a single tensioning arm (4) is provided, wherein the second spring support (10), against which the spring means (8) are supported in circumferential direction, is assigned to the base member (3).

14. Tensioning device according to any of claims 1 to 12,
**characterised in**
**that** the at least one tensioning arm comprises a first tensioning arm (4) and a second tensioning arm (6), wherein the first tensioning arm (4) is pivotably supported around a first pivot axis (A4) and comprises a first tensioning roller (5), and wherein the second tensioning arm (6) is pivotably supported around a second pivot axis (A6) and comprises a second tensioning roller (7), and that the second spring support (10), against which the spring means (8) are supported in circumferential direction, are assigned to the second tensioning arm (6), so that the two tensioning arms (4, 6) are resiliently supported relative to each other in circumferential direction via the spring means (8).

15. Method for adjusting the torque of a tensioning device (2) according to any of claims 1 to 14, with the following steps:
determining a target torque (Mset), which the tensioning device (2) shall have in the mounted condition;
measuring the actual torque (M) of the tensioning device (2) across a pivot angle (a) of the tensioning arm (4), when pivoting the tensioning arm (4) relative to the component (3, 6) against which the spring means (8) are supported;
pivoting the tensioning arm (4) relative to the component (3, 6) up to a target pivot angle (aset), in which the target torque (Mset) is attained;
applying a marking (30, 30') representing the target pivot angle (aset) to the tensioning device (2).

16. Method according to claim 15,
**characterised by** the further steps:
assembling the tensioning device (2) in a belt drive (32) and
adjusting the tensioning arm (4) relative to the tensioning roller (5) by means of the adjusting mechanism (11) until the marking (30) representing the desired pivot angle (aset) is reached.

## Revendications

1. Dispositif tendeur pour une transmission par moyen de traction, comprenant :
un corps de base (3) ;
au moins un bras tendeur (4, 6), qui est logé en étant susceptible de pivoter autour d'un axe de pivotement (A4, A6) par rapport au corps de base (3) et qui comporte un galet tendeur (5, 7) qui est logé de manière rotative sur un support de palier (17) du bras tendeur (4, 6) ;
des moyens à ressort (8), destinés à contraindre élastiquement le bras tendeur (4, 6), les moyens à ressort (8) s'étendant autour de l'axe de pivotement (A4, A6), entre un premier appui de ressort (9) du bras tendeur (4) et un deuxième appui de ressort (10) du dispositif tendeur,
**caractérisé par** un mécanisme d'ajustement (11), destiné à ajuster le premier appui de ressort (9) par rapport au support de palier (17) du galet tendeur (5) dans la direction périphérique, autour de l'axe de pivotement (A4, A6), de sorte que lorsque le dispositif tendeur est monté, l'angle entre le premier appui de ressort (9) et le deuxième appui de ressort (10) en rapport à l'axe de pivotement (A4, A6) et ainsi la force élastique de précontrainte des moyens à ressort (8) soit variable.

2. Dispositif tendeur selon la revendication 1, **caractérisé**
**en ce que** le mécanisme d'ajustement (11) comporte un actionneur (18), qui est relié de manière rigide avec l'appui de ressort (9) et un organe de soutien (19), qui est relié de manière rigide avec le support de palier (17), l'actionneur (18) étant guidé de manière ajustable autour de l'axe de pivotement (A4, A6) par rapport à l'organe de soutien (19), et un organe d'actionnement (20), destiné à ajuster l'actionneur (18) par rapport à l'organe de soutien (19).

3. Dispositif tendeur selon la revendication 2, **caractérisé**
**en ce que** des moyens d'enclenchement (31), lesquels sont conçus pour maintenir l'actionneur (18) dans des positions définies par rapport à l'organe de soutien (19) sont prévus dans le chemin de transmission des forces entre l'organe d'actionnement (20) et l'actionneur (18).

4. Dispositif tendeur selon l'une quelconque des revendications 1 à 3,
**caractérisé**
**en ce que** le premier appui de ressort (9) et le galet tendeur (5) sont ajustables l'un par rapport à l'autre de jusqu'à 10° autour de l'axe de pivotement (A4, A6), notamment de jusqu'à ± 5° à partir d'une position initiale (P0).

5. Dispositif tendeur selon l'une quelconque des revendications 1 à 4,
**caractérisé**
**en ce qu'**entre le premier appui de ressort (9) et les moyens à ressort (8) est créée une butée (28), une tangente (T0) à travers la butée (28) étant définissable en tant que perpendiculaire au rayon (R) de l'axe de pivotement (A4, A6) vers la butée (28),
le mécanisme d'ajustement (11) étant conçu de telle sorte qu'en partant d'une position initiale (P0), la butée (28) ait une direction de déplacement qui en vue axiale, se situe à l'intérieur d'une plage angulaire (γ) de jusqu'à ± 10° par rapport à la tangente (T0).

6. Dispositif tendeur selon l'une quelconque des revendications 1 à 5,
**caractérisé**
**en ce que** le support de palier (17) comporte un orifice de passage (21) axial s'étendant longitudinalement dans la direction périphérique.

7. Dispositif tendeur selon l'une quelconque des revendications 2 à 6,
**caractérisé**
**en ce que** l'organe d'actionnement (20) est fixé de manière stationnaire et rotative sur le bras tendeur (4) et comporte une structure d'actionnement (26) qui coopère avec une structure antagoniste (25) d'un élément antagoniste (19), relié avec le support de palier (17) pour un déplacement commun, de telle sorte qu'une rotation de l'organe d'actionnement (20) et de la structure d'actionnement (26) reliée de manière solidaire en rotation avec celui-ci provoque un déplacement circonférentiel du bras tendeur (4) par rapport au support de palier (17) dans la direction périphérique autour de l'axe de pivotement (A4, A6). (figures 1 à 6)

8. Dispositif tendeur selon la revendication 7, **caractérisé**
**en ce que** l'organe d'actionnement (20) comporte en tant que structure d'actionnement (26) une structure dentée, qui coopère avec un segment denté (25) de l'élément antagoniste (19), l'élément antagoniste (19) étant un disque de recouvrement supérieur pour le galet tendeur (5) .
(figure 1)

9. Dispositif tendeur selon la revendication 7, **caractérisé**
**en ce que** l'organe d'actionnement (20) comporte en tant que structure d'actionnement (26) une structure plane excentrique, qui coopère avec une structure antagoniste (25) de l'élément antagoniste (19), l'élément antagoniste (19) étant un disque de recouvrement supérieur pour le galet tendeur (5).
(figure 4)

10. Dispositif tendeur selon la revendication 7, **caractérisé**
**en ce que** l'organe d'actionnement (20) est fixement relié avec le support de palier (17) et en ce que le support de palier (17) est relié de manière solidaire en rotation avec l'actionneur (19), l'actionneur (19) étant conçu sous la forme d'un disque de recouvrement inférieur pour le galet tendeur (5) et la structure d'actionnement (26) étant réalisée sur le disque de recouvrement inférieur sous la forme d'une structure plane excentrique,
la structure antagoniste (25) étant réalisée sous la forme d'une structure antagoniste sur l'organe de soutien (18) sur lequel est soutenue la structure plane excentrique.
(figure 5)

11. Dispositif tendeur selon l'une quelconque des revendications 1 à 10,
**caractérisé**
**en ce que** l'au moins un bras tendeur (4, 6) et le corps de base (3) comportent chacun un orifice (41, 42), dans lequel, en position montée peut s'étendre un arbre d'entraînement et/ou une poulie (35) d'un agrégat (33).

12. Dispositif tendeur selon l'une quelconque des revendications 1 à 11,
**caractérisé**
**en ce que** les moyens à ressort (8) sont conçus sous la forme d'un ressort de flexion, qui s'étend dans la direction périphérique autour de l'axe de pivotement (A4, A6) entre le premier appui de ressort (9) et le deuxième appui de ressort (10) et qui fait preuve d'une extension périphérique de notamment moins de 980°, de préférence de moins de 720°, le cas échéant, de moins de 360°.

13. Dispositif tendeur selon l'une quelconque des revendications 1 à 12,
**caractérisé**
**en ce qu'**il n'est prévu qu'un seul bras tendeur (4), le deuxième appui de ressort (10), contre lequel les moyens à ressort (8) s'appuient dans la direction périphérique étant associé au corps de base (3).

14. Dispositif tendeur selon l'une quelconque des revendications 1 à 12,
**caractérisé**
**en ce que** l'au moins un bras tendeur comporte un premier bras tendeur (4) et un deuxième bras tendeur (6), le premier bras tendeur (4) étant logé en étant susceptible de pivoter autour d'un premier axe de pivotement (A4) et comportant un premier galet tendeur (5) et le deuxième bras tendeur (6) étant logé en étant susceptible de pivoter autour d'un deuxième axe de pivotement (A6) et comportant un deuxième galet tendeur (7), et
**en ce que** le deuxième appui de ressort (10), contre lequel les moyens à ressort (8) s'appuient dans la direction périphérique est associé au deuxième bras tendeur (6), de telle sorte que les deux bras tendeurs (4, 6) soient élastiquement appuyés l'un contre l'autre dans la direction périphérique par l'intermédiaire des moyens à ressort (8).

15. Procédé, destiné à régler le couple d'un dispositif tendeur (2) selon l'une quelconque des revendications 1 à 14, comportant les étapes suivantes:
définir un couple de consigne (Mset), que le dispositif tendeur (2) doit présenter lorsqu'il est monté ;
mesurer le couple (M) effectif du dispositif tendeur (2) par l'intermédiaire d'un angle de pivotement (a) du bras tendeur (4), lors du pivotement du bras tendeur (4) par rapport à la pièce (3, 6), contre lequel les moyens à ressort (8) sont appuyés ;
faire pivoter le bras tendeur (4) par rapport à la pièce (3, 6) jusqu'à un angle de pivotement de consigne (aset), dans lequel le couple de consigne (Mset) est appliqué ;
apposer sur le dispositif tendeur (2) un marquage (30, 30') représentant l'angle de pivotement de consigne.

16. Procédé selon la revendication 15,
**caractérisé par** les étapes additionnelles:
incorporer le dispositif tendeur (2) dans un entraînement par courroie (32) et
ajuster le bras tendeur (4) par rapport au galet tendeur (5) au moyen du mécanisme d'ajustement (11), jusqu'à l'atteinte du marquage (30) représentant l'angle de pivotement de consigne (aset).
